# EUROPÄISCHE PATENTSCHRIFT

(11) **EP 2 475 492 B1**
(45) Veröffentlichungstag und Bekanntmachung des Hinweises auf die Patenterteilung: **04.12.2013**
(21) Anmeldenummer: 10770938.8
(22) Anmeldetag: 27.08.2010
(51) Int. Cl.: B23K 9/32

(54) **SCHLAUCHPAKET UND KUPPLUNGSVORRICHTUNG FÜR EINE SCHWEISSVORRICHTUNG**
HOSE ASSEMBLY AND COUPLING DEVICE FOR A WELDING DEVICE
FAISCEAU DE TUYAUX ET DISPOSITIF DE RACCORDEMENT POUR APPAREIL DE SOUDAGE

(30) Priorität: 11.09.2009 AT 14472009
(43) Veröffentlichungstag der Anmeldung: 18.07.2012
(73) Patentinhaber: Fronius International GmbH, 4643 Pettenbach (AT)
(72) Erfinder: ANZENGRUBER, Thomas, A-4040 Linz (AT); BRANDSTÖTTER, Rudolf, A-4656 Kirchham (AT)
(74) Vertreter: Burger, Hannes
(86) Internationale Anmeldenummer: PCT/AT2010/000307
(87) Internationale Veröffentlichungsnummer: WO 2011/029109

(56) Entgegenhaltungen:
- EP-A2- 1 584 399
- WO-A1-2004/105992
- DE-A1- 3 825 313
- DE-C1- 4 207 277
- US-A- 4 210 796

## Beschreibung

Die Erfindung betrifft ein Schlauchpaket, umfassend eine Mehrzahl von Leitungen zur Versorgung eines Schweißbrenners mit den jeweiligen Betriebsmedien, weiters ein Kupplungselement, welches mit einem Schlauchpaket verbindbar ist, sowie eine Schweißvorrichtung, wie dies in den Ansprüchen 1, 18 und 19 angegeben ist, (siehe z.B. WO 2004/105992 A1).

Aus dem Stand der Technik sind zahlreiche Schweißvorrichtungen bekannt, bei denen der Schweißbrenner über ein möglichst formflexibles Schlauchpaket, welches mehrere Leitungen zur Übertragung von elektrischen und gasförmigen Betriebsmedien umfasst, mit einem Schweißaggregat bzw. einer Schweißstromquelle verbunden ist. Zum einfachen und möglichst raschen Tauschen oder Ersetzen des Schweißbrenners bzw. des Schlauchpaketes ist das in Bezug zum Schweißbrenner gegenüberliegende Ende des Schlauchpaketes mit einem Steckerelement versehen, welches an eine Kupplungsbuchse bzw. an einen sogenannten Zentralanschluss am Schweißaggregat ankuppelbar ist. Mit einem derartigen Kupplungssystem werden in der Regel die diversen Leitungen für den Schweißstrom, den Schweißdraht, das Schutzgas und auch Steuerleitungen annähernd simultan bzw. durch lediglich einen Kupplungsvorgang gegenüber dem Schweißaggregat wahlweise angebunden bzw. abgekoppelt. Solche Kupplungsvorrichtungen werden aufgrund der kombinierten Kuppelbarkeit von elektrischen und gasförmigen Leitungen auch als Zentral- bzw. Mehrfach-Kupplungsvorrichtung bezeichnet. Hierfür sind im schlauchpaketseitigen Steckerelement und in der korrespondierenden, schweißaggregatseitigen Kupplungsbuchse unterschiedlich ausgestaltete, jeweils miteinander korrespondierende elektrische Anschlüsse und strömungstechnische Verbindungselemente vorgesehen. Ebenso ist es bekannt, elektrische Steuerleitungen zwischen dem Schweißbrenner und dem Schweißaggregat mittels einem eigenständigen Steuerleitungsstecker kuppelbar, d.h. bedarfsweise trenn- und verbindbar auszuführen. Diese Verbindungssysteme haben sich für die Übertragung bzw. Weiterleitung von elektrischen und gasförmigen Medien an einen Schweißbrenner bewährt. Dieses Anschlusskonzept ist jedoch für Schweißbrenner, bei welchen eine aktive Kühlung eingesetzt werden soll, nur bedingt zufriedenstellend.

Der vorliegenden Erfindung liegt die Aufgabe zu Grunde, ein verbessertes Anschlusssystem für einen aktiv gekühlten Schweißbrenner zu schaffen.

Diese Aufgabe der Erfindung wird durch ein Kupplungselement gemäß den Merkmalen im Anspruch 1, durch ein Schlauchpaket entsprechend den Merkmalen des Anspruches 18 und durch eine Schweißvorrichtung entsprechend den Merkmalen des Anspruches 19 gelöst.

Durch die erfindungsgemäßen Ausgestaltungen gemäß Anspruch 1, 18 und 19 wird unter anderem erreicht, dass ein bestimmter Kupplungszustand bezüglich der elektrischen Steuersignale bzw. bezüglich der zumindest einen elektrischen Leitung für die Schweißenergie und/oder bezüglich der zumindest einen Leitung für gasförmige Betriebsmedien, wie zum Beispiel Schweißgas und/oder Druckluft, unabhängig vom Kupplungszustand der wenigstens einen Kühlmittelleitung zum Schweißbrenner bedarfsweise verändert, insbesondere aktiviert und deaktiviert werden kann. Beispielsweise kann der Kühlmittelkreislauf unverändert geschlossen bleiben, während die Mehrfach-Kupplungsvorrichtung, insbesondere die Zentral-Kupplungsverbindung für die Übertragung von elektrischen Steuersignalen bzw. primären Betriebsmedien, wie zum Beispiel Schweißdraht, Schweißstrom und/oder Schutzgas, gelöst wird bzw. getrennt ist. Dadurch ist es ermöglicht, beispielsweise einen neuen oder andersartigen Schweißdraht in das Schlauchpaket einzuführen bzw. Kontroll- oder Wartungstätigkeiten an der Mehrfach-Kupplungsvorrichtung vorzunehmen, während die Kupplungsverbindung für das bevorzugt flüssige Kühlmedium, insbesondere für entsprechendes Kühlwasser, unverändert gekuppelt bzw. aktiv bleibt. Das heißt, der Kühlkreislauf muss nicht zwingend geöffnet werden, um an der Mehrfach-Kupplungsvorrichtung bzw. am Zentralanschluss des Schlauchpaketes allfällige Kontrolltätigkeiten bzw. Wartungsarbeiten durchführen zu können. Andererseits kann die Mehrfach-Kupplungsvorrichtung für die elektrischen bzw. gasförmigen Betriebsmedien bzw. für die jeweiligen Steuer- bzw. Datenleitungen unverändert gekoppelt bleiben, während die wenigstens eine Kühlmittelleitung getrennt, insbesondere der Kühlkreislauf unterbrochen wird. Die eigenständige Kühlmittelkupplung, welche gegenüber dem zentralen Mehrfachanschluss zwischen dem Schlauchpaket und dem Schweißaggregat distanziert angeordnet ist, erbringt darüber hinaus den Vorteil, dass die Gefahr von elektrischen Kurzschlüssen deutlich verringert wird. Insbesondere ist die Gefahr eines Kurzschlusses zwischen elektrischen Leitungen bzw. Kontaktstellen zwischen dem Schweißaggregat und dem Schweißbrenner stark reduziert, da die Kühlmittel-Kupplung gesondert ausgebildet ist und somit gezielt bzw. wesentlich bewusster zu bedienen ist. Eventuelle Unachtsamkeiten der jeweiligen Bedien- bzw. Wartungspersonen führen somit nicht zwingend zu elektrischen Störungen bzw. Schäden innerhalb der Schweißvorrichtung. Weiters ist durch die eigenständige Kühlmittelkupplung von Vorteil, dass das Schlauchpaket in Durchführungen eines so genannten Hohlwellen-Roboters verlegt werden kann, ohne dass die Kupplungselemente demontiert werden müssen. Somit wird die Verlegung des Schlauchpakets erheblich vereinfacht und der Vorgang wesentlich beschleunigt. Ferner ist von Vorteil, dass die jeweils benötigten Betriebsmedien im Wesentlichen über ein Mehrfach-Kupplungselement übertragen werden.

Ein weiterer besonderer Vorteil der erfindungsgemäßen Maßnahmen liegt darin, dass eventuelle Leckagen im Kühlkreislauf, insbesondere im Bereich der Kupplungsvorrichtung relativ frühzeitig und einfach erkennbar sind. Auch dadurch kann die Gefahr von Schäden an der Schweißvorrichtung, insbesondere an der Steuervorrichtung des Schweißaggregates oder einer Produktionsanlage minimiert werden.

Durch die erfindungsgemäßen Maßnahmen wird also eine gesteigerte Bedienungssicherheit und damit einhergehend auch eine erhöhte Funktionszuverlässigkeit bzw. Anlagenverfügbarkeit erzielt. Von einem Bediener bzw. Wartungspersonal ist nämlich der Kühlmittelkreis bzw. die Kühlmittelkupplung bewusst und aktiv bzw. gesondert zu öffnen bzw. zu trennen, sodass die Gefahr einer unbeabsichtigten Fehlbedienung bzw. eines überraschenden Kühlmittelaustrittes reduziert ist. Während nämlich eine Trennung der zentralen Kupplungsvorrichtung für die elektrischen bzw. gasförmigen Betriebsmedien keine besonderen Vorkehrungen erfordert, ist die Trennung der Kupplungselemente der Kühlmittelkupplung zumindest an die vorherige Deaktivierung bzw. Abschaltung oder Absperrung des Kühlkreislaufes gebunden. Außerdem können durch einen gegebenenfalls zu erwartenden Verlust bzw. Austritt des Kühlmediums, insbesondere von Wasser, zusätzliche Auffangmaßnahmen bzw. Vorkehrungen für eine eventuelle Nachfüllung von Kühlmittel bereits vorsorglich getroffen werden. Durch die separat ausgebildete und räumlich abgesetzte bzw. separierte Kühlmittelkupplung wird gegenüber der jeweiligen Bedien- bzw. Wartungsperson jedenfalls eine erhöhte Bewusstseinsbildung erzielt. Es wird aber auch die Gefahr von sporadisch auftretenden Fehlerquellen in schweißtechnischen Anlagen reduziert.

Vorteilhaft ist auch eine optionale Weiterbeildung nach Anspruch 2, da zum einen ein rascher Koppelungs- bzw. Entkoppelungsvorgang für die wenigstens eine Kühlmittelleitung ermöglicht ist. Darüber hinaus ist der jeweilige Handhabungsablauf für einen Bediener quasi intuitiv erkennbar ist, sodass keine langwierigen Einschulungsmaßnahmen oder keine besonderen technischen Kenntnisse erforderlich sind, um die Kühlmittelkupplung aktivieren und deaktivieren zu können.

Entsprechend einer vorteilhaften Weiterbildung ist die Kühlmittelkupplung werkzeuglos betätigbar. Von Vorteil ist dabei, dass trotz der eigenständig ausgebildeten und separat zu bedienenden Kupplungsvorrichtung für das Kühlmedium ein rascher Aufbau und gegebenenfalls auch eine rasche Trennung der Kupplungsvorrichtung für das Kühlmedium ermöglicht ist. Insbesondere bei industriellen Schweißanlagen bzw. in Verbindung mit industriellen Schweißrobotern ist eine möglichst rasche und einfache Wartungsfähigkeit der schweißtechnischen Komponenten von erhöhter Bedeutung.

Von Vorteil ist auch eine Ausführungsform nach Anspruch 3, da dadurch der Bedienungskomfort und damit einhergehend auch die Verbindungsqualität bzw. Verbindungssicherheit gesteigert werden kann. Insbesondere kann durch die Anbringung eines ersten Kupplungselementes der Kühlmittel-Kupplungsvorrichtung am bzw. im relativ formstarren Endabschnitt des Schlauchpaketes bzw. innerhalb von dessen Kupplungselement gegenüber einem Schweißaggregat, eine noch funktionszuverlässigere Kupplungsverbindung aufgebaut werden. Außerdem wird dadurch der Verbindungsvorgang für einen Bediener bzw. eine Wartungsperson deutlich erleichtert.

Von besonderem Vorteil ist auch eine Ausbildung, nach der das Kupplungselement für das Kühlmedium als Kupplungsbuchse ausgeführt ist, welche zumindest einen quer zur Längsachse des Schlauchpakets verlaufenden Kühlmittelkanal ausbildet, da dadurch eine Zufluss- bzw. Abflussrichtung des Kühlmediums gegenüber dem Schlauchpaket grundsätzlich quer bzw. orthogonal zur Kuppelungs- und Entkuppelungsrichtung für die sonstigen Leitungen des Schlauchpakets bzw. quer zur Steckrichtung der Mehrfach-Kupplungsvorrichtung ausgerichtet ist. Dadurch wird die Wahrscheinlichkeit einer Benetzung der elektrischen Anschlüsse bzw. Verbindungsschnittstellen, welche bevorzugt am stirnseitigen Ende des Schlauchpaketes angeordnet sind, reduziert bzw. hintan gehalten. Ferner wird dadurch die Wahrscheinlichkeit eines Eintritts von Kühlflüssigkeit in die für gasförmige Betriebsmedien, vorgesehenen Schlauchleitungen, welche vorzugsweise ebenso am stirnseitigen Ende des Schlauchpaketes herausgeführt sind bzw. ein offenes Ende aufweisen, in einfacher Art und Weise deutlich minimiert.

Vorteilhaft ist weiters eine Ausbildung nach der das Kupplungselement für das Kühlmedium als in den Griffteil des Schlauchpaketes, oder als in den Griffteil von dessen Kupplungselement integrierte Kupplungsbuchse ausgebildet ist, da dadurch eine möglichst stabile und positionsgesicherte Festlegung der Kupplungsbuchse gewährleistet ist. Weiters wird der Handhabungskomfort und auch die Qualität einer aufzubauenden Kupplungsverbindung gesteigert. Darüber hinaus wird die Wahrscheinlichkeit einer nachteiligen, lageabhängig variierenden Verteilung von eventuell ausgetretenem Kühlmittel innerhalb des Schlauchpakets bzw. innerhalb der Mehrfach-Kupplungsvorrichtung reduziert. Insbesondere kann gegebenenfalls ausgetretenes Kühlmedium bzw. Kühlwasser relativ leicht wieder abfließen bzw. aus der Kupplungsvorrichtung oder dem Schlauchpaket austreten, bevor Folgeschäden bzw. Ausfälle auftreten.

Durch die Maßnahmen gemäß Anspruch 4 kann eine besonders kompakte Kupplungsschnittstelle bzw. ein möglichst schlank aufgebautes Schlauchpaket geschaffen werden. Insbesondere wird trotz der baulich gesondert ausgeführten Kupplungsvorrichtung bzw. Kupplungsschnittstelle für das Kühlmedium eine damit einhergehende Vergrößerung bzw. Erweiterung der räumlichen Abmessungen, insbesondere der maximalen Breite bzw. des Durchmessers des Schlauchpaketes bzw. dessen Kupplungselementes vermieden. Dadurch ist es möglich, das angegebene Schlauchpaket auch unter relativ beengten Platzverhältnissen problemlos einsetzen zu können. Insbesondere kann das Schlauchpaket bzw. dessen abschließender Schnittstellenkörper trotz der baulich eigenständig ausgeführten Kupplungsvorrichtung für das Kühlmedium, weiterhin relativ problemlos in einen Manipulatorarm eines Industrieroboters eingezogen, insbesondere zumindest teilweise in Hohlwellen-Robotern verlegt werden. Der vom Schweißbrenner abgewandte Schnittstellenkörper bzw. Endabschnitt des Schlauchpaketes bleibt also im Vergleich zu standardmäßigen Schlauchpaketen weiterhin möglichst schlank bzw. kompakt, obwohl er einen gesteigerten technischen Funktionsumfang aufweist. Eine erhöhte Robustheit und eine verbesserte Handhabung des Schlauchpaketes wird erzielt, wenn entsprechend einer vorteilhaften Weiterbildung die jeweils benötigten Leitungen für die Betriebsmedien in einem zwischen einem Griffteil des Kupplungselementes und dem Schweißbrenner verlaufenden Schutzschlauch geführt sind. Außerdem wird durch die Führung der wenigstens einen Kühlmittelleitung neben den sonstigen Leitungen im Schlauchpaket die Gefahr einer Leckage im Kühlkreislauf minimiert. Zudem ist die Gefahr eines ungewollten Abreißens der wenigstens einen Kühlmittelleitung von der jeweiligen Anschlussstelle, insbesondere von der Anschlussstelle an der Kupplungsbuchse, reduziert.

Auch durch die Maßnahmen gemäß Anspruch 5 kann eine zumindest teilweise Verlegung in relativ engen Kanälen ermöglicht bzw. ein Einziehen des Schlauchpaketes in relativ knapp bemessenen Hohlräumen, insbesondere in den Bewegungsarmen von Industrierobotern, deutlich erleichtert werden.

Vorteilhaft ist auch eine Ausbildung nach Anspruch 6, da dadurch die maximale Breite bzw. der maximale Durchmesser des Schlauchpaketes in seinem vom Schweißbrenner ab gewandten Endabschnitt nicht vergrößert wird und trotzdem eine zuverlässige, gegenüber unerwünschter Entkoppelung gesicherte Kupplungsverbindung aufgebaut werden kann. Außerdem wird dadurch die Verlegung des Schlauchpakets in Kanälen bzw. Hohlräumen, wie z.B. in den Armen von Schweißrobotern begünstigt, da keine störenden Vorsprünge vorliegen, welche Verhakungen bzw. Verkrallungen verursachenden würden. Ferner wird dadurch die Gefahr von Beschädigungen der Kupplungsvorrichtung selbst oder von peripheren Leitungen bzw. Elementen im Bereich des Aufnahmekanals deutlich reduziert.

Entsprechend einer vorteilhaften Ausführungsform umfasst das Schlauchpaket wenigstens eine erste Kühlmittelleitung zur Zufuhr eines Kühlmediums zum Schweißbrenner und wenigstens eine weitere Kühlmittelleitung zur Abfuhr des erwärmten Kühlmediums aus dem Schlauchpaket, wobei das schlauchpaketseitige Kupplungselement als kombinierte Kupplungsschnittstelle für die erste und die weitere Kühlmittelleitung ausgebildet ist. Dadurch wird eine besonders effiziente Kühlung des Schweißbrenners bzw. eine besonders leistungsfähige Kühlvorrichtung geschaffen und ist trotzdem eine hohe Kompaktheit der Kühlmittelkupplung gewährleistet. Außerdem werden dadurch möglichst niedrige Montage- bzw. Produktionszeiten erzielt und ist die Ersatzteillogistik bzw. Lagerhaltung durch die baulich kombinierte Kupplungsschnittstelle für die beiden Kühlmittelleitungen vereinfacht.

Die Aufgabe der Erfindung wird auch durch ein Kupplungselement nach Anspruch 7 gelöst. Durch die Maßnahmen gemäß Anspruch 7 kann eine sichere und langfristig zuverlässige Dichtwirkung zwischen dem Steckerelement und einem korrespondierenden Kupplungselement erzielt werden. Insbesondere wenn das wenigstens eine hohlzylindrische Stiftelement zumindest teilweise in eine damit korrespondierende Kupplungsbuchse eingeführt wird und eine partielle Überlappung zwischen dem Stiftelement und der damit korrespondierenden Kupplungsbuchse vorliegt, ist eine zuverlässige und robuste Kupplungsvorrichtung geschaffen. Außerdem wird dadurch der Kupplungsvorgang erleichtert, da die Stiftelemente gleichzeitig als Positionierelemente dienen, welche die ordnungsgemäße Relativposition zwischen dem Steckerelement und dem korrespondierenden Kupplungselement deutlich anzeigen bzw. vorgeben.

Außerdem ist mit einem Kupplungselement, welches gemäß einem der Ansprüche 8 bis 14 ausgebildet ist, zumindest einer der vorhergehend erläuterten technischen Effekte und Vorteile erzielbar.

Entsprechend einer vorteilhaften Ausführung ist die Kühlmittelkupplung als Steckverbindungskupplung ausgeführt und zur wahlweise aktivier- und trennbaren Verbindung zwischen einer in einem Schweißaggregat angeordneten Kühlmittelquelle oder einem separat angeordneten Kühlaggregat und einem Schlauchpaket vorgesehen. Dadurch wird ein rascher und zugleich problemloser Aufbau der Kupplungsverbindung bzw. eine einfache Aufhebung einer aktiven Kupplungsverbindung für das Kühlmedium ermöglicht. Die jeweils erforderliche Handhabung ist dabei auch für einen technisch unversierten Personenkreis nahezu intuitiv erkennbar, sodass für den Fall einer erforderlichen Auftrennung oder Aktivierung des Kühlkreislaufes üblicherweise keine Schwierigkeiten bestehen. Insbesondere können dadurch besondere Schulungsmaßnahmen erübrigt oder spezielle Benutzerhinweise minimiert werden.

In einer Variante der Erfindung ist am Steckerelement wenigstens ein Vorsprung zum Aufbau einer bedarfsweise lösbaren, mechanischen Rastverbindung gegenüber wenigstens einer Hinterschneidung am korrespondierenden Kupplungselement oder an einem Griffteil des Schlauchpaketes ausgebildet. Durch diese Maßnahmen wird eine rasch und einfach aktiver- und deaktivierbare Rastverbindung zwischen den beiden Kupplungselementen der Kühlmit-tel-Kupplungsvorrichtung geschaffen. Die Zuordnung des Rastvorsprungs zum Steckerelement und die Zuordnung der mit dem Rastvorsprung in mechanische Wechselwirkung versetzbaren Hinterschneidung bzw. Vertiefung zum schlauchpaketseitigen Kupplungselement erbringt den Vorteil, dass das schlauchpaketseitige Kupplungselement möglichst robust ist und relativ unempfindlich gegenüber mechanischen Beanspruchungen ist, wie sie zum Beispiel während dem Verlegen des Schlauchpaketes auftreten. Das Steckerelement mit den Rastvorsprüngen unterliegt geringeren, mechanischen Beanspruchungen und kann gegebenenfalls deutlich einfacher bzw. kostengünstiger ersetzt werden.

Von Vorteil ist dabei, wenn der wenigstens eine Vorsprung durch zwei am Steckerelement diametral gegenüber liegende, federnd gelagerte Rastelemente gebildet ist, da dadurch eine komfortable Handhabung der Kühlmittel-Kupplungsvorrichtung gewährleistet ist und außerdem eine automatische Sicherung einer aktiven Kupplungsverbindung erfolgt, sodass zusätzliche bzw. gesondert durchzuführende Sicherungsmaßnahmen erübrigt sind.

Entsprechend einer vorteilhaften Ausgestaltung ist das schlauchpaketseitige Kupplungselement als Kupplungsbuchse ausgeführt. Dadurch wird ein Stecker-Buchsen-System geschaffen, welches den Anforderungen an eine hohe Dichtheit, an eine adäquate Robustheit und an eine einfache bzw. intuitive Handhabung bestmöglich gerecht wird.

Von Vorteil sind auch die Maßnahmen gemäß Anspruch 15, da dadurch das zweite, steckerartige Kupplungselement möglichst kompakt bzw. schlank ausgeführt werden kann. Insbesondere werden dadurch hakenartig abstehende Komponenten am schlauchpaketseitigen Kupplungselement vermieden, sodass das Einziehen bzw. das Verlegen eines Schlauchpaketes, welches mit dem angegebenen Kupplungselement ausgestattet ist, deutlich erleichtert ist.

Durch die Maßnahmen gemäß Anspruch 16 wird eine zusammenhängende Baueinheit geschaffen, welche den Installations- bzw. Montageaufwand in Bezug auf die Anbindung an ein Schweißaggregat möglichst minimiert. Außerdem kann durch die bauliche Zusammenfassung der angegebenen Komponenten die Wahrscheinlichkeit von Fehlinstallationen bzw. von unvollständigen Montagen reduziert werden.

Von besonderem Vorteil sind auch die Maßnahmen nach Anspruch 17, da dadurch auch bei einem überraschenden Austritt von Kühlflüssigkeit im Bereich der Kühlmittel-Steckverbindung die Wahrscheinlichkeit einer Benetzung der elektrischen Kontaktstellen des unmittelbar benachbarten Betriebsmedien-Kupplungselementes bzw. die Gefahr eines elektrischen Kurzschlusses mit einfachen, aber effizienten Maßnahmen reduziert ist.

Insbesondere ist es von Vorteil, wenn die Kuppelungs- und Entkuppelungsrichtung zwischen dem Steckerelement und dem Kupplungselement der Kühlmittelkupplung quer zur Längsachse des Schlauchpakets ausgerichtet ist, da dadurch eine logische Trennung der jeweiligen Kupplungsverbindungen nicht nur in baulicher Hinsicht, sondern auch im Hinblick auf die Art der Betätigung vorliegt. Darüber hinaus wird dadurch die Wahrscheinlichkeit eines Übertritts eines insbesondere flüssigen Kühlmediums auf die Schnittstellen für die elektrischen bzw. gasförmigen Betriebsmedien, zum Beispiel während eines Montage- oder Demontagevorgangs des Schlauchpaketes bzw. des Schweißbrenners, reduziert. Folglich wird die Gefahr von Beschädigungen oder von Kurzschlüssen minimiert bzw. werden dadurch zusätzliche Zeit- und Kostenaufwendungen für Reinigungs- oder Trockenlegungsarbeiten erübrigt.

Schließlich bietet eine Schweißvorrichtung, welche gemäß Anspruch 19 ausgebildet ist, zumindest einen der vorhergehend erläuterten, technischen Effekte und Vorteile.

Zum besseren Verständnis der Erfindung wird diese anhand der nachfolgenden Figuren näher erläutert.

Es zeigen jeweils in stark vereinfachter, schematischer Darstellung:
- Fig. 1: eine beispielhafte Ausführungsform einer Schweißvorrichtung umfassend einen Schweißbrenner, welcher über ein Schlauchpaket und eine MehrfachKupplungsvorrichtung sowie über eine gesondert ausgeführte Kühlmittel-Kupplungsvorrichtung an ein Schweißaggregat angeschlossen ist;
- Fig. 2: einen Teilabschnitt des Schlauchpaketes im Endabschnitt mit der Mehrfach-Kupplungsvorrichtung und der Kühlmittel-Kupplungsvorrichtung während dem aktiv gekuppelten Zustand der Kühlmittel-Kupplungsvorrichtung in perspektivischer Ansicht;
- Fig. 3: die Mehrfach-Kupplungsvorrichtung gemäß Fig. 2 im abgekuppelten Zustand der Kühlmittel-Kupplungsvorrichtung in Zusammenhang mit einem korrespondierenden Kupplungselement an einem Schweißaggregat;
- Fig. 4: eine Seitenansicht der Mehrfach-Kupplungsvorrichtung gemäß Fig. 3;
- Fig. 5: eine Stirnansicht der Mehrfach-Kupplungsvorrichtung gemäß Pfeil V in Fig. 4;
- Fig. 6: die Mehrfach-Kupplungsvorrichtung gemäß Fig. 2 in Seitenansicht, während dem Aktivzustand der Kühlmittel-Kupplungsvorrichtung;
- Fig. 7: die Mehrfach-Kupplungsvorrichtung gemäß Fig. 6 während inaktiver Kühlmit-tel-Kupplungsvorrichtung;
- Fig. 8a-8d: das Steckerelement der Kühlmittel-Kupplungsvorrichtung in verschiedenen Ansichten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

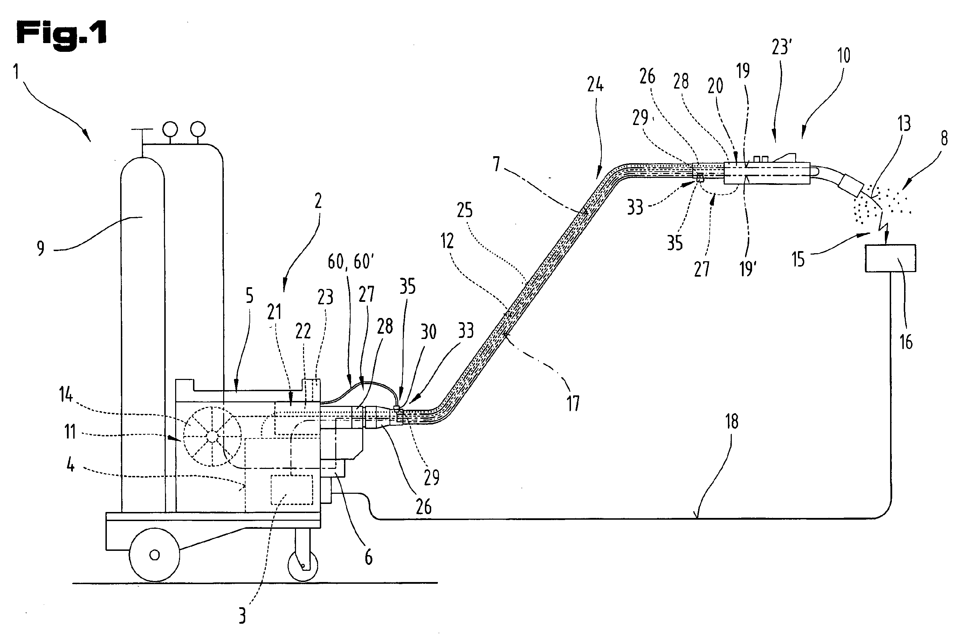

In Fig. 1 ist eine beispielhafte Ausführungsform eines Schweißgerätes 1 bzw. einer Schweißanlage zur Durchführung diverser Schweißprozesse veranschaulicht. Dieses schematisch veranschaulichte Schweißgerät 1 ist für MIG/MAG-Schweißprozesse konzipiert, wobei jedoch die nachfolgend beschriebene Erfindung auch bei Schweißvorrichtungen zum WIG-Schweißen, Stabelektroden-Schweißen, Doppeldraht/Tandem-Schweißen oder für sonstige Schweißverfahren, bei welchen im Bereich der Schweißstelle hohe Temperaturen auftreten und ein Kühlen des Schweißbrenners zweckmäßig ist, eingesetzt werden kann.

Das jeweilige Schweißgerät 1 umfasst je nach Gattung bzw. je nach ausführbarem Schweißverfahren wenigstens eine der nachfolgend beschriebenen Komponenten. Die Hauptkomponente des Schweißgerätes 1 ist durch ein Schweißaggregat 2 gebildet, welches die Schweißenergie und die sonstigen für den Schweißprozess erforderlichen Betriebsmedien direkt oder indirekt zur Verfügung stellt bzw. reguliert. Das Schweißaggregat 2 umfasst folglich wenigstens ein Leistungsteil 3, welches unter anderem die elektrische Schweißenergie bereitstellt und eine Steuervorrichtung 4 zur Steuerung bzw. Regelung des Schweißprozesses bzw. der jeweils relevanten Prozessparameter.

Sofern das Schweißgerät 1 als MIG/MAG-Schweißvorrichtung ausgebildet ist, so ist am oder im Schweißaggregat 2, welches ein nach außen hin im wesentlichen abgeschlossenes Gehäuse 5 umfasst, ein elektrisch steuerbares Ventil 6 ausgebildet, welches mit wenigstens einer schlauchartigen Leitung 7 für ein Schweißgas 8, insbesondere für ein Schutzgas, wie beispielsweise CO₂, Helium oder Argon strömungsverbunden ist bzw. zwischen einem Gasspeicher 9 und einem Schweißbrenner 10 angeordnet ist. Das Ventil 6 zur gesteuerten Bereitstellung von Schweißgas 8 im Bereich des Scheißprozesses wird über ein entsprechendes Bedienelement angesteuert, welches bei Handschweißgeräten üblicherweise am Schweißbrenner 10 ausgebildet ist und entweder direkt vom Bedien- bzw. Startelement am Schweißbrenner 10 oder indirekt über die Steuervorrichtung 4 in den strömungstechnisch gesperrten bzw. durchgeschalteten Zustand versetzt wird.

Zudem kann das Schweißgerät 1 eine Drahtvorschubvorrichtung 11 umfassen, welche entweder - wie dargestellt - als integraler Bestandteil des Schweißaggregats 2 ausgeführt sein kann, oder aber als baulich eigenständige Komponente ausgebildet sein kann. Mittels der Drahtvorschubvorrichtung 11 wird dem Schweißbrenner 10, insbesondere dem Schweißprozess, eine abschmelzende, drahtförmige Schweißelektrode zugeführt, welche als Zusatzwerkstoff für die zu erstellende Schweißverbindung dient. Vor allem für das MIG/MAG-Schweißen ist eine Drahtvorschubvorrichtung 11 vorgesehen, wobei über wenigstens eine schlauch- oder schraubenfederartige Leitung 12 ein Zusatzwerkstoff, insbesondere ein Schweißdraht 13, ausgehend von einer Vorratstrommel 14 bzw. von einer Schweißdrahtrolle in den Bereich des Schweißbrenners 10 gefördert wird. Selbstverständlich ist es auch möglich, das Drahtvorschubgerät 11 nicht in das Gehäuse 5 des Schweißaggregats 2 zu integrieren, sondern als baulich eigenständiges Zusatzgerät auszuführen.

Ebenso ist es möglich, dass zumindest eine Teilkomponente des Drahtvorschubgerätes 11 im Schweißbrenner 10 angeordnet ist und dem Schweißprozess eine abschmelzende Schweißelektrode ausgehend vom Schweißbrenner 10 zugeführt wird. Ebenso ist es möglich, dass der Schweißbrenner 10 eine nicht abschmelzende Elektrode aufweist und ein Zusatzwerkstoff, insbesondere eine abschmelzende Schweißelektrode, per Hand zugeführt wird, wie dies beim WIG-Schweißen üblich ist.

Der elektrische Strom zum Aufbauen bzw. Aufrechterhalten eines Lichtbogens 15, insbesondere eines Schweißlichtbogens zwischen der abschmelzenden oder nicht abschmelzenden Elektrode und einem Werkstück 16, wird ausgehend vom Schweißaggregat 2 bzw. ausgehend von dessen elektrischen Leistungsteil 3 dem Schweißbrenner 10, insbesondere der Elektrode, über wenigstens eine Schweißstrom-Leitung 17 zugeführt. Das zu schweißende Werkstück 16, welches üblicherweise durch mehrere zu verschweißende Teile gebildet ist, ist über eine weitere Schweißstrom-Leitung 18 ebenfalls mit dem Schweißgerät 1, insbesondere mit dem elektrischen Leistungsteil 3 im Schweißaggregat 2 verbunden. Eine der beiden Schweißstrom-Leitungen 17, 18, insbesondere die Leitung 18 zur Übertragung der Schweißstrom-Masse, ist üblicherweise als baulich eigenständige bzw. separat geführte elektrische Leitung ausgebildet.

Über diese kombiniert oder jeweils separat zum Schweißbrenner 10 bzw. zum Werkstück 16 geführten Schweißstrom-Leitungen 17, 18 wird dem Schweißprozess jene elektrische Energie zugeführt, welche erforderlich ist, um den Lichtbogen bzw. einen Plasmastrahl für den Schweiß- bzw. Schneidprozess zu bilden bzw. aufrecht zu erhalten.

Wie vorhergehend erläutert wurde, ist in Abhängigkeit des jeweils auszuführenden Schweißverfahrens bzw. Scheißprozesses eine Mehrzahl von Leitungen 7 und/oder 12 und/oder 17, 18 erforderlich, um den Schweißbrenner 10 mit den jeweils benötigten Betriebsmedien, wie zum Beispiel Schweißstrom, Schweißdraht und/oder Schutzgas versorgen zu können. Häufig ist auch zumindest eine elektrische Daten- bzw. Steuerleitung erforderlich, über welche zwischen dem Schweißbrenner 10 und dem Schweißaggregat 2, und gegebenenfalls auch umgekehrt, Steuer- bzw. Überwachungssignale übertragen werden können.

Bei der erfindungsgemäßen Ausführung ist der Schweißbrenner 10 aktiv gekühlt, um dessen thermische Beanspruchung möglichst gering zu halten bzw. um positive Auswirkungen auf die maximal mögliche, unterbrechungsfreie Einsatzdauer zu erzielen bzw. um positive Ergebnisse in Bezug auf den auszuführenden Schweißprozess zu erreichen. Weiters kann diese aktive Kühlung vor allem bei einem handgeführten Schweißbrenner 10 einen deutlichen Komfort- bzw. Sicherheitsgewinn darstellen. Im Gegensatz zu passiv gekühlten, insbesondere durch die Umgebungsluft gekühlten Schweißbrennern, kann mit aktiv gekühlten Schweißbrennern 10 problemlos auch eine 100%ige Einschalt- bzw. Betriebsdauer erzielt werden, während bei luftgekühlten bzw. mit Umgebungsluft gekühlten Schweißbrennern die maximale Einschaltdauer häufig reduziert ist und zwischenzeitliche Abkühlphasen ohne Schweißbetrieb erforderlich bzw. empfohlen sind. Demnach umfasst das Schweißgerät 1 wenigstens eine Kühlmittelleitung 19 zumindest zur Zufuhr eines Kühlmediums zum Schweißbrenner 10. Als Kühlmedium ist bevorzugt Wasser oder ein sonstiges, wasserbasierendes Kühlmittel eingesetzt.

Bevorzugt ist ein geschlossener Kühlkreislauf 20 ausgebildet, welcher wenigstens eine Vorlauf-Kühlmittelleitung 19 und wenigstens eine Rücklauf-Kühlmitteleitung 19' umfasst. Dabei wird dem Schweißbrenner 10 über die Vorlauf-Kühlmittelleitung 19 ein bevorzugt flüssiges Kühlmedium zugeführt, wobei dieses Kühlmedium einen Teil der im Bereich des Schweißbrenners 10 auftretenden Wärmeenergie aufnimmt bzw. den Schweißbrenner 10, insbesondere dessen Düsenstock bzw. vorderen Endabschnitt kühlt. Das entsprechend erwärmte Kühlmedium wird sodann über die Rücklauf-Kühlmittelleitung 19' vom Schweißbrenner 10 wieder abgeführt. Das heißt, dass der Schweißbrenner 10 bevorzugt in einen ein Kühlmedium aufweisenden Kühlkreislauf 20 eingebunden ist, wobei eine entsprechende Kühlmittelquelle 21 das Kühlmedium bereitstellt. Diese das Kühlmedium bereitstellende Kühlmittelquelle 21 kann im Schweißaggregat 2 angeordnet sein bzw. kann auch ein baulich separat ausgeführtes Kühlaggregat vorgesehen sein.

Die wenigstens eine Kühlmittelleitung 19, 19' verbindet dabei den Schweißbrenner 10 mit der Kühlmittelquelle 21 bzw. mit dem Kühlaggregat und sorgt für eine ausreichende Kühlung bzw. einen Wärmetransfer vom Schweißbrenner 10 zur Kühlmittelquelle 21 bzw. zum Kühlmittelaggregat und somit für eine entsprechende Temperierung des Schweißbrenners 10. Der Kühlmittelquelle 21 bzw. dem Schweißbrenner 10 kann auch eine Temperatursteuerung oder Temperaturregelung zugeordnet sein, durch welche bestimmte Abschnitte des Schweißbrenners 10 unterhalb eines oberen Temperaturgrenzwertes bzw. innerhalb eines vorbestimmten Temperaturbereiches gehalten werden.

Vor allem bei aktiv mit Gas oder Luft gekühlten Schweißbrennern 10 ist es auch möglich, anstelle der Ausbildung eines Kühlkreislaufes 20, lediglich eine Kühlmittelleitung 19 vorzusehen, welche das Kühlmittel von der Kühlmittelquelle 21, beispielsweise einem Ventilator oder einem Druckspeicher, zum Schweißbrenner 10 fördert. Das erwärmte, gasförmige Kühlmittel kann sodann im Umgebungsbereich des Schweißbrenners 10 entweichen bzw. über eine Auffangvorrichtung, wie z.B. eine Abzugshaube, in die Peripherie geleitet werden.

Somit kann die jeweilige Kühlmittelquelle 21 - wie schematisch dargestellt - einen integralen Bestandteil des Schweißgerätes 1 bzw. des Schweißaggregates 2 darstellen oder alternativ auch durch ein separat angeordnetes Kühlaggregat gebildet sein, welches die entsprechende Kühlleistung für den Schweißbrenner 10 zur Verfügung stellt. Die jeweilige Kühlmittelquelle 21 bzw. das jeweilige Kühlaggregat stellt die entsprechende Kühlenergie zur Verfügung und überträgt das Kühlmedium über die wenigstens eine Kühlmittelleitung 19, 19' zum Schweißbrenner 10. In den geschlossenen Kühlkreislauf 20 bzw. in eine unidirektionale Kühlmittel-Übertragungsstrecke können gemäß den aus dem Stand der Technik bekannten Ausführungsformen auch nicht dargestellte Ventile, Expansionsbehälter, Sensoren, Wärmetauscher und/oder Pumpen implementiert sein.

Gemäß einer vorteilhaften Ausführungsform der Kühlvorrichtung bzw. der Kühlmittelquelle 21 kann ein Flüssigkeitsbehälter 22, insbesondere ein Wasserbehälter vorgesehen sein, welcher das Kühlmedium, insbesondere das Kühlwasser vorrätig hält. Mittels einer nicht dargestellten Fördervorrichtung für das Kühlmittel, insbesondere mittels einer Flüssigkeitspumpe, wird das Kühlmittel ausgehend von der Kühlmittelquelle 21 zum Schweißbrenner 10 gefördert. Üblicherweise bei der Inbetriebnahme des Schweißgerätes 1 bzw. beim Start des Schweißvorganges, welcher über wenigstens ein am Schweißbrenner 10 vorgesehenes Bedienelement erfolgen kann, wird die Kühlmittelquelle 21 bzw. der Kühlkreislauf 20 unmittelbar oder zeitversetzt aktiviert und daraufhin eine Kühlung bzw. Temperierung des Schweißbrenners 10 bewirkt. Eine Aktivierung der Kühlvorrichtung für den Schweißbrenner 10 kann aber auch bedarfsgesteuert, insbesondere temperaturabhängig erfolgen. Die Kühlvorrichtung bzw. die Kühlmittelquelle 21 bzw. das Kühlaggregat kann gemäß beliebigen aus dem Stand der Technik bekannten Ausführungen umgesetzt sein und beispielsweise auch einen Wärmetauscher zur Abfuhr der aufgenommenen Wärmeenergie bzw. zur Kühlung und Wiederaufbereitung des Kühlmediums umfassen. Folglich kann auch zumindest ein Strömungswächter bzw. Temperatursensor vorgesehen sein, mit welchem die Kühlleistung bzw. die Kühlfunktion der Kühlmittelquelle 21 kontrolliert bzw. geregelt werden kann.

Wie an sich bekannt, weist das Schweißgerät 1 weiters wenigstens eine Ein- und/oder Ausgabevorrichtung 23, 23' auf, über welche die diversen Schweißparameter, Betriebsarten oder Schweißprogramme des Schweißgerätes 1 eingestellt bzw. aufgerufen werden können. Die Ein- und/oder Ausgabevorrichtung 23, 23' kann dabei dem Schweißaggregat 2 und/oder dem Schweißbrenner 10 zugeordnet sein. Die über die Ein- und/oder Ausgabevorrichtung 23, 23' eingestellten bzw. einstellbaren Schweißparameter, Betriebsarten oder Schweißprogramme werden zur Abarbeitung bzw. Umsetzung an die Steuervorrichtung 4 weitergeleitet. Die jeweiligen Einstellungen werden von der Steuervorrichtung 4 an die jeweiligen Komponenten der Schweißanlage bzw. des Schweißgerätes 1 übertragen bzw. werden diese Komponenten entsprechend angesteuert, sodass entsprechende Soll-Werte regelungs- oder steuerungstechnisch erzielt werden. Im Falle einer industriellen Schweißanlage, insbesondere einer Schweißanlage in Verbindung mit Industrierobotern, kann auch eine peripher ausgebildete Steuer- bzw. Regelungsvorrichtung vorgesehen sein.

Grundsätzlich wird festgehalten, dass für die unterschiedlichen Schweißverfahren bzw. Schweißgeräte 1, wie beispielsweise WIG-Geräte, MIG/MAG-Geräte oder Plasmageräte, nicht alle der zuvor genannten Komponenten verwendet bzw. eingesetzt werden müssen. Je nach den erforderlichen Betriebsmedien im Bereich der Schweißstelle, wie zum Beispiel Schweißstrom, Schweißdraht, Schutzgas und/oder Steuersignale, ist am Schweißgerät 1 bzw. am Schweißaggregat 2 wenigstens ein entsprechendes Schlauchpaket 24 angeschlossen, welches mehrere Leitungen, beispielsweise die Leitung 7 für ein Schweißgas 8, die Leitung 12 für eine abschmelzende Elektrode bzw. einen Schweißdraht 13, die wenigstens eine Schweißstrom-Leitung 17 und/oder wenigstens eine elektrische Steuerleitung 25 einstückig zusammenfasst und zum Schweißbrenner 10 führt.

Neben den diversen, jeweils benötigten Leitungen 7, 12, 17 und/oder 25, welche zu einem gemeinsamen Schlauchpaket 24 baulich kombiniert sind, umfasst das Schlauchpaket 24 weiters die wenigstens eine Kühlmittelleitung 19, 19' zur Zufuhr und/oder Abfuhr eines Kühlmediums in Bezug zum Schweißbrenner 10. Bevorzugt ist die wenigstens eine Kühlmittelleitung 19, 19' im Schlauchpaket 24 bzw. am Schlauchpaket 24 geführt und dient als Übertragungsmedium für das bevorzugt flüssige Kühlmittel zwischen der Kühlmittelquelle 21 bzw. dem Schweißaggregat 2 und dem Schweißbrenner 10. Im Schlauchpaket 24 sind demnach die diversen, jeweils benötigten Leitungen zur Übertragung der jeweils erforderlichen Betriebsmedien und wenigstens eine Leitung zur Übertragung des Kühlmediums vorgesehen.

Das Schlauchpaket 24 weist an seinem vom Schweißbrenner 10 abgewandten Ende wenigstens ein Mehrfach-Kupplungselement 26 auf. Dieses Mehrfach-Kupplungselement 26 ist zur bedarfsweise lösbaren Verbindung von mehreren, elektrische Signale bzw. Energie und/oder Gas übertragenden Leitungen 7; 12; 17 und/oder 25 des Schlauchpaketes 24 mit dem Schweißaggregat 2 bzw. der dementsprechenden Stromquelleneinheit vorgesehen. Dieses Mehrfach-Kupplungselement 26 kann dabei als Schraub- oder Steckkupplung ausgebildet sein und stellt ein Kupplungsmittel zur gemeinsamen Koppelung und Entkoppelung von mehreren elektrischen Leitungen 17; 25 und/oder einer Schutzgas-Leitung 7 gegenüber dem Schweißaggregat 2 dar. Bevorzugt werden mittels diesem Mehrfach-Kupplungselement 26 die Leitung 7 für ein Schweißgas 8, die Leitung 12 zur Förderung eines Schweißdrahtes 13, wenigstens eine elektrische Steuerleitung 25 und wenigstens eine Schweißstrom-Leitung 17 gegenüber dem Schweißaggregat 2 wahlweise verbunden und getrennt, wobei die genannten Leitungen zu einem einstückigen Schlauchpaket 24 zusammengefasst sind. Der Schweißbrenner 10 ist üblicherweise permanent mit dem zweiten bzw. gegenüber liegenden Ende des Schlauchpaketes 24 verbunden. Der Schweißbrenner 10 ist in der Regel nur durch Zerlegung des Schweißbrenners 10 vom Schlauchpaket 24 abnehmbar.

Das Mehrfach-Kupplungselement 26 an dem vom Schweißbrenner 10 abgewandten Ende des Schlauchpaketes 24 stellt eine Teilkomponente einer Kupplungsvorrichtung 27 dar, welche zur Verbindung des Schlauchpaketes 24 mit einem Schweißaggregat 2 vorgesehen ist, wie dies der Fig. 1 beispielhaft zu entnehmen ist. Neben dem schlauchpaketseitigen Mehrfach-Kupplungselement 26 ist wenigstens ein korrespondierendes, aggregatseitiges Mehrfach-Kupplungselement 28 ausgebildet. Die miteinander korrespondierenden Mehrfach-Kupplungselemente 26, 28 ergeben die Mehrfach-Kupplungsvorrichtung 27, über welche eine bedarfsweise lösbare Verbindung des Schlauchpakets 24 bzw. des Schweißbrenners 10 gegenüber dem Schweißaggregat 2 aufgebaut werden kann. Die beiden Kupplungselemente 26, 28 der Mehrfach-Kupplungsvorrichtung 27 sind dabei entsprechend einem miteinander korrespondierenden Stecker-Buchsen-System ausgeführt. Eine zentrale Mehrfach-Kupplungsvorrichtung 27 für elektrische Energie und/oder elektrische Signale bzw. Schweißgas führende Leitungen zwischen einem Schweißbrenner 10 bzw. Schlauchpaket 24 und einem Schweißaggregat 2 ist an sich bekannt. Solche zentralen Mehrfach-Kupplungsvorrichtungen 27 sind entweder als Schraub- oder Steckkupplung ausgeführt, wobei eine Sicherung einer aktiven Kupplungsverbindung häufig über eine Schraubverbindung, insbesondere mittels einer Überwurfmutter erfolgt. Die Sicherung eines aktiven Kupplungszustandes zwischen den beiden Mehrfach-Kupplungselementen 26, 28 kann entsprechend einer vorteilhaften Ausführungsform aber auch durch eine Klemmvorrichtung erfolgen, welche mittels einem Hebelspannelement aktivier- und deaktivierbar ist.

Wesentlich ist, dass an dem vom Schweißbrenner 10 abgewandten Ende des Schlauchpakets 24 neben dem Mehrfach-Kupplungselement 26 ein baulich gesondert bzw. eigenständig ausgeführtes, weiteres Kupplungselement 29 ausgebildet ist, welches zur bedarfsweise lösbaren Verbindung der wenigstens einen Kühlmittelleitung 19, 19' des Schlauchpaketes 24 mit einer im Schweißaggregat 2 angeordneten Kühlmittelquelle 21 oder mit einem separat angeordneten Kühlaggregat vorgesehen ist. Dieses zusätzliche bzw. separat ausgeführte Kupplungselement 29 ist dabei unabhängig vom Kupplungszustand des Mehrfach-Kupplungselementes 26 wahlweise kuppel- und entkuppelbar. Das heißt, dass am Schlauchpaket 24 ein gesondert ausgeführtes bzw. gesondert bedien- bzw. betätigbares Kupplungselement 29 ausgebildet ist, über welches die wenigstens eine Kühlmittelleitung 19, 19' des Schlauchpaketes 24 mit der Kühlmittelquelle 21 bedarfsweise verbunden und gegenüber der Kühlmittelquelle 21 bedarfsweise getrennt werden kann, ohne dass eine Beeinflussung des Kupplungszustandes des Mehrfach-Kupplungselementes 26 erforderlich ist bzw. eintritt.

Die entsprechende Mehrfach-Kupplungsvorrichtung 27 zwischen dem Schlauchpaket 24 und dem Schweißaggregat 2 umfasst somit neben einem ersten, schweißaggregatseitigen Kupplungselement 28 und einem zweiten, schlauchpaketseitigen Kupplungselement 26 auch ein drittes Kupplungselement 29 sowie ein damit korrespondierendes, viertes Kupplungselement 30. Das miteinander korrespondierende dritte und vierte Kupplungselement 29, 30 ist zur gas- oder flüssigkeitsdichten Überleitung eines Kühlmediums zwischen der im Schweißaggregat 2 angeordneten Kühlmittelquelle 21 oder alternativ zwischen einem separat angeordneten Kühlaggregat und dem Schlauchpaket 24 bzw. Schweißbrenner 10 vorgesehen. Wesentlich ist dabei, dass das dritte und vierte Kupplungselement 29, 30 für die Überleitung des Kühlmediums unabhängig vom Kupplungszustand des ersten und zweiten Kupplungselementes 28, 26, d.h. unabhängig vom Kupplungszustand der Mehrfach-Kupplungsvorrichtung 27, bedarfsweise kuppelbar und bei Bedarf voneinander lösbar ausgebildet ist.

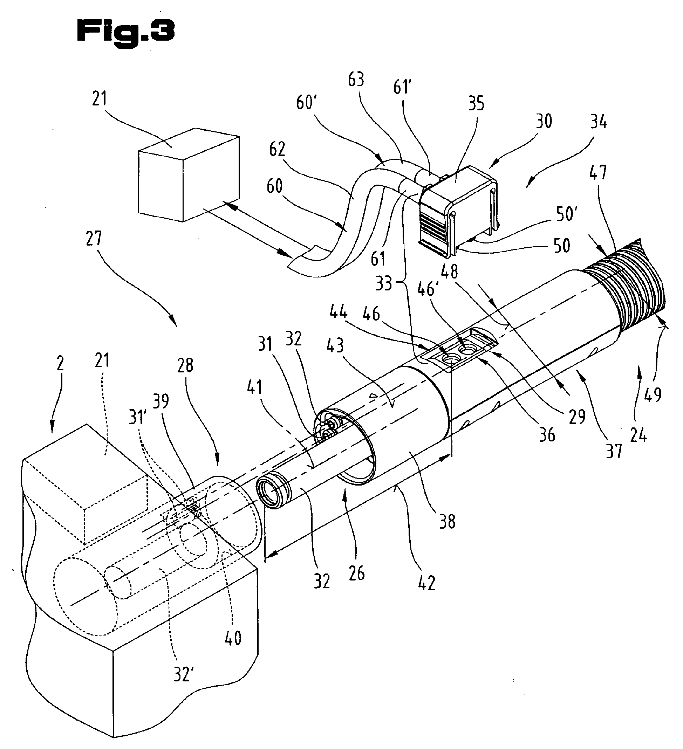

Wie am besten Fig. 3 zu entnehmen ist, umfasst das erste und zweite Kupplungselement 28, 26 der Mehrfach-Kupplungsvorrichtung 27 jeweils eine Mehrzahl von korrespondierenden Verbindungsschnittstellen 31, 31' und 32, 32', welche zur Über- bzw. Weiterleitung von physikalisch unterschiedlichen Betriebsmedien zwischen dem ersten Kupplungselement 28 und dem zweiten Kupplungselement 26, und umgekehrt, ausgebildet sind, sobald das erste und zweite Kupplungselement 28, 26 im ordnungsgemäß miteinander gekuppelten Zustand vorliegen. Die miteinander korrespondierenden Verbindungsschnittstellen 31, 31' sind dabei beispielsweise durch stift- bzw. buchsenartige Verbindungselemente zur Über- bzw. Weiterleitung von gasförmigen Medien, wie zum Beispiel Schweißgas oder Druckluft, ausgebildet. Die wenigstens eine weitere Verbindungsschnittstelle 32, 32' ist beispielsgemäß zur Über- bzw. Weiterleitung des Schweißstroms ausgehend vom ersten Kupplungselement 28 in Richtung zum zweiten Kupplungselement 26 vorgesehen. Die Schweißstrom-Verbindungsschnittstelle 32 am zweiten Kupplungselement 26 ist dabei als massiver, in etwa fingerdicker Kontaktstift ausgeführt, welcher vom Stirnende des Schlauchpakets 24 domartig vorkragt. Die damit korrespondierende, aggregatseitige Verbindungsschnittstelle 32' ist durch eine elektrische Kontaktierungsbuchse gebildet, in welche die stiftartige Verbindungsschnittstelle 32 einführbar ist und daraufhin in der als Steckbuchse ausgeführten Verbindungsschnittstelle 32' kraftschlüssig klemmbar ist. Dadurch wird eine zuverlässige und möglichst großflächige Kontaktierung zwischen der stift- bzw. bolzenartigen Verbindungsschnittstelle 32 und der buchsenartigen Verbindungsschnittstelle 32' aufgebaut, wodurch auch die Übertragung hoher Ströme, insbesondere hoher Schweißströme, ermöglicht ist, ohne dass übermäßige Erhitzungen der Kontaktstellen auftreten.

Wesentlich ist, dass das dritte und vierte Kupplungselement 29, 30 eine baulich gesondert ausgeführte Kühlmittelkupplung 33 bilden, welche unabhängig von der Mehrfach-Kupplungsvorrichtung 27 für diverse Betriebsmedien des Schweißbrenners 10 bedarfsweise aktivierbar, insbesondere kuppelbar, und deaktiverbar, insbesondere trennbar, ist. Dabei ist das vierte Kupplungselement 30 als erste Teilkomponente einer bevorzugt werkzeuglos betätigbaren Kühlmittelkupplung 33 ausgebildet und zum bedarfsweise lösbaren Anschließen der wenigstens einen Kühlmittelleitung 19, 19' im Schlauchpaket 24 an eine integriert oder extern angeordnete Kühlmittelquelle 21 bzw. an ein dementsprechendes Kühlaggregat vorgesehen.

Wie am besten aus Fig. 3 ersichtlich ist, bilden das vierte Kupplungselement 30 und das dritte Kupplungselement 29 bevorzugt eine Steckverbindung 34 aus, welche zur wahlweise aktiver- und trennbaren Verbindung zwischen einer im Schweißaggregat 2 angeordneten Kühlmittelquelle 21 oder einem separat angeordneten Kühlaggregat und dem Schlauchpaket 24 bzw. dessen Schweißbrenner 10 ausgebildet ist. Das vierte Kupplungselement 30 stellt dabei eine Teilkomponente der Steckverbindung 34 dar, wobei es im ordnungsgemäß gekuppelten Zustand zur Weiterleitung von flüssigen Kühlmedien vorgesehen ist und dabei in Art eines Steckerelementes 35 ausgebildet ist. Demgegenüber ist das schlauchpaketseitige, dritte Kupplungselement 29 der Kühlmittelkupplung 33 bzw. der Steckverbindung 34 durch wenigstens eine Kupplungsbuchse 36 gebildet, welche in Bezug auf das Steckerelement 35 korrespondierend ausgebildet ist. Diese Kupplungsbuchse 36 ist in dem vom Schweißbrenner 10 abgewandten Endabschnitt des Schlauchpaketes 24 angeordnet.

Entsprechend einer vorteilhaften Ausführungsform ist das dritte Kupplungselement 29 an bzw. in einem im Wesentlichen formstabilen Griffteil 37 angeordnet. Dieser Griffteil 37 stellt eine Handhabe dar, über welche das Schlauchpaket 24 möglichst rasch und einfach gegenüber einem Schweißaggregat 2 an- und abkuppelbar ist. Der Griffteil 37 ist bevorzugt durch eine Teilkomponente des schlauchpaketseitigen Kupplungselementes 26 gebildet. Insbesondere kann der Griffteil 37 als hülsenförmiges Element ausgeführt sein, welches gleichzeitig als Führungsorgan 38 zwischen dem ersten und zweiten Kupplungselement 28, 26 dient. Entsprechend eine vorteilhaften Ausführungsform ist der Griffteil 37 hohlzylindrisch ausgebildet, wobei der vom Schweißbrenner 10 abgewandte Endabschnitt des Griffteils 37 ein buchsenförmiges Führungsorgan 38 ausbildet, welches mit einem korrespondierenden Führungsorgan 39 am Schweißaggregat 2 bzw. am ersten Kupplungselement 28 zusammenwirkt. Insbesondere ist das hohlzylindrische Führungsorgan 38 des zweiten Kupplungselementes 26 in eine weitere hohlzylindrische Führungsbohrung 40 am ersten Kupplungselement 28 einführbar. Die miteinander korrespondierenden Führungsorgane 38, 39 nehmen quer zur Längsachse 41 des Schlauchpaketes 24 bzw. der Kupplungsvorrichtung 27 verlaufende Kräfte zumindest teilweise auf und sorgen so für eine adäquate mechanische Festigkeit der Mehrfach-Kupplungsvorrichtung 27.

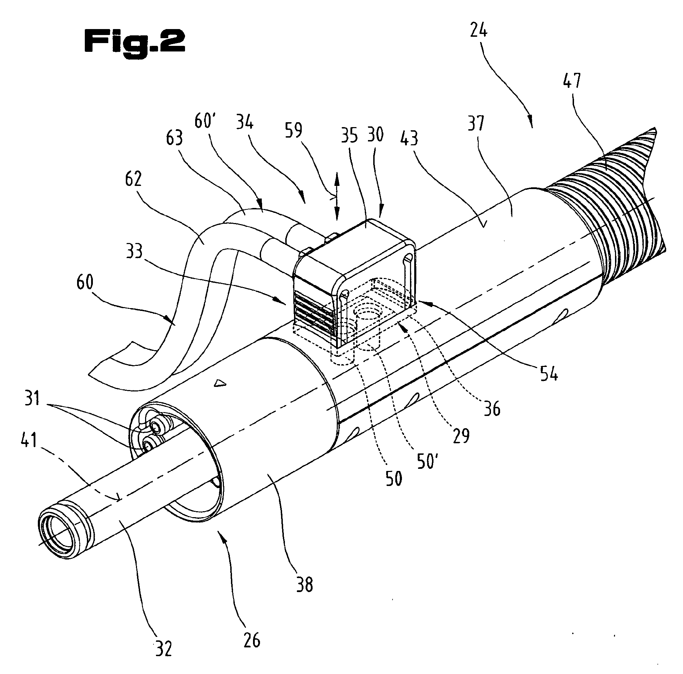

Die Kupplungsbuchse 36 der Kühlmittelkupplung 33 ist bevorzugt in den Griffteil 37 des Schlauchpaketes 24 bzw. des zweiten Kupplungselementes 26 eingebaut. Das heißt, dass die Kupplungsbuchse 36, der Griffteil 37 und das zweite Kupplungselement 26 in Verbindung mit dem Schlauchpaket 24 eine einstückige, baulich kombinierte Einheit bilden, wie dies am bestem der Fig. 3 zu entnehmen ist. Insbesondere ist das als Kupplungsbuchse 36 ausgebildete, dritte Kupplungselement 29 mit dem zweiten Kupplungselement 26 baulich vereint, sodass eine einstückige, nur durch Zerlegung trennbare Baueinheit gebildet ist, wie dies am besten aus Fig. 3 ersichtlich ist. Das dritte Kupplungselement 29, insbesondere die Kupplungsbuchse 36 der Kühlmittelkupplung 33, ist dabei relativ nahe zum Mehrfach-Kupplungselement 26 angeordnet, insbesondere ebenso in dem vom Schweißbrenner 10 abgewandten Endabschnitt des Schlauchpaketes 24 ausgebildet. Die Verbindungsschnittstellen 31, 32 des Mehrfach-Kupplungselementes 26 sind dabei an der Stirnseite des Schlauchpaketes 24 bzw. an der Stirnseite von dessen Griffteil 37 angeordnet. Insbesondere bilden diese Verbindungsschnittstellen 31, 32 die stirnseitigen bzw. die vom Schweißbrenner 10 abgewandten Abschlüsse der jeweiligen Leitungen 7; 12; 17; 25 für die diversen Betriebsmedien aus. Im Unterschied dazu ist die wenigstens eine Übergangsschnittstelle 44 an der Kupplungsbuchse 36 für die Weiterleitung eines Kühlmediums an der Mantelfläche bzw. im wesentlichen parallel zur Mantelfläche des Schlauchpaketes 24 bzw. des Griffteils 37 ausgebildet. Das heißt, dass das buchsenartige Kupplungselement 29 für ein Kühlmedium baulich gesondert ausgeführt und im Mehrfach-Kupplungselement 26 des Schlauchpakets 24 integriert ist, wobei die Anschlüsse des Kupplungselementes 26 und des Kupplungselementes 29 distanziert angeordnet sind, wie dies zumindest den Fig. 2 bis 5 zu entnehmen ist. Ein in Längsrichtung des Schlauchpaketes 24 gemessener Abstand 42 zwischen dem zweiten und dritten Kupplungselement 26, 29 beträgt dabei weniger als 50 cm, insbesondere in etwa 10 cm.

Die Kupplungsbuchse 36 ist dabei in vorteilhafter Art und Weise derart positioniert, dass sie über eine Mantelfläche 43 des Griffteils 37, welche bevorzugt zylindrisch oder annähernd zylindrisch ausgebildet ist, nicht vorsteht. Insbesondere ist die Kupplungsbuchse 36 der Kühlmittelkupplung 33 im Griffteil 37 integriert bzw. versenkt angeordnet. Entsprechend einer vorteilhaften Ausführungsform ist eine sichtbare Fläche bzw. die Übergangsschnittstelle 44 der Kupplungsbuchse 36 bündig oder annähernd bündig mit der äußeren Mantelfläche 43 des Griffteils 37 ausgerichtet. Entsprechend einer bevorzugten Ausführungsform ist die Übergangsschnittstelle 44 der Kupplungsbuchse 36 gegenüber der äußeren Mantelfläche 43 des Griffteils 37 vertieft angeordnet, wie dies am besten aus Fig. 3 ersichtlich ist. Das heißt, dass trotz der baulich separiert angeordneten Kupplungsbuchse 36 am Schlauchpaket 24 bzw. an dessen Griffteil 37 keine vom Griffteil 37 bzw. keine vom Schlauchpaket 24 abstehenden bzw. vorkragenden Teile vorliegen, sobald die Kühlmittelkupplung 33 gemäß der Darstellung in Fig. 3 gelöst ist. Im Gegensatz dazu steht das Steckerelement 35 von der Mantelfläche 43 des Schlauchpakets 24 bzw. des Griffteils 37 ab, wenn die Kühlmittelkupplung 33 aktiviert ist, wie dies aus Fig. 2 ersichtlich ist.

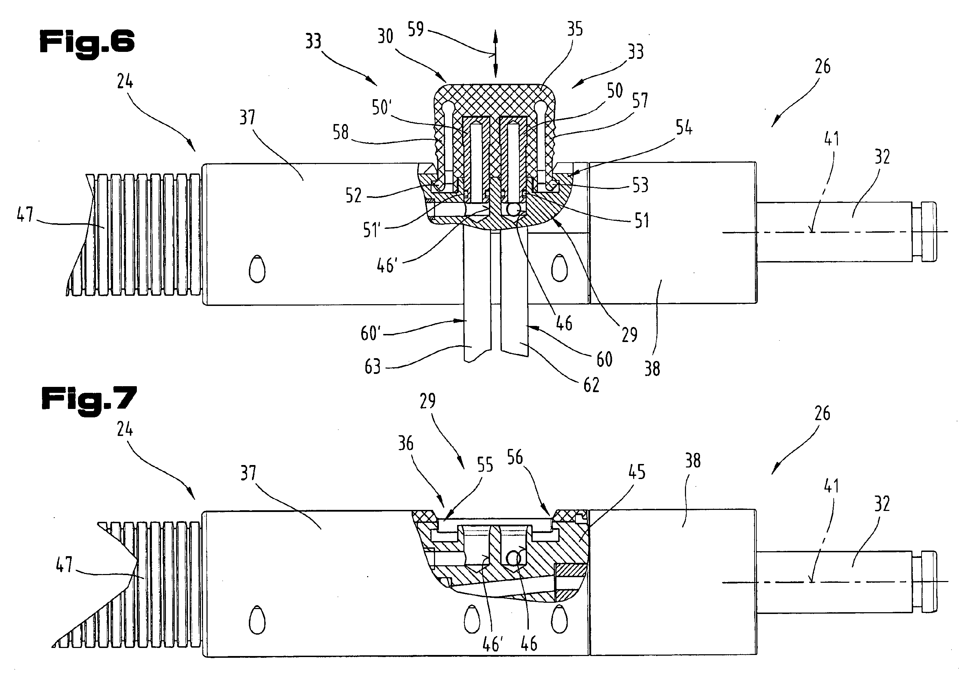

Die Kupplungsbuchse 36 ist entsprechend einer vorteilhaften Ausführungsform als integraler Bestandteil eines Anschlussblocks 45 des zweiten Kupplungselementes 26 - siehe Fig. 6, 7 - ausgebildet. An diesem Anschlussblock 45 innerhalb des Griffteils 37 sind mehrere Leitungen 7 und/oder 12 und/oder 17 und/oder 25 des Schlauchpaketes 24 angeschlossen bzw. gehaltert. Der Anschlussblock 45 stellt dabei quasi das Endstück für mehrere der im Schlauchpaket 24 geführten Leitungen 7; 12; 17; 25 und bevorzugt auch für die wenigstens eine Kühlmittelleitung 19, 19' dar. Dieser Anschlussblock 45 ist bevorzugt aus einem metallischen Werkstoff, insbesondere aus Messing gebildet und besitzt eine Mehrzahl von Bohrungen bzw. Anschlussstellen für die diversen Leitungen 7; 12; 17; 25 und für die Kühlmittelleitungen 19, 19' im Schlauchpaket 24.

Die schlauchpaketseitige Kupplungsbuchse 36 bildet zumindest einen quer zur Längsachse 41 des Schlauchpaketes 24 verlaufenden Kühlmittelkanal 46, 46' aus. Dieser wenigstens einfach, bevorzugt zweifach ausgeführte Kühlmittelkanal 46, 46' mündet jeweils in die Kühlmittelleitung 19, 19' innerhalb des Schlauchpaketes 24. Das heißt, dass die Kupplungsbuchse 36 mittels zweier Kühlmittelkanäle 46, 46' getrennte Strömungsverbindungen zu den jeweiligen Kühlmittelleitungen 19, 19' herstellt. Entsprechend einer vorteilhaften Ausführungsform ist im Schlauchpaket 24 wenigstens eine erste Kühlmittelleitung 19 zur Zufuhr eines Kühlmediums zum Schweißbrenner 10, also eine sogenannte Kühlmittel-Vorlaufleitung, und wenigstens eine weitere Kühlmittelleitung 19' zur Abfuhr des erwärmten Kühlmediums aus dem Schlauchpaket 24, also eine sogenannte Kühlmittel-Rücklaufleitung, ausgebildet. Das dritte Kupplungselement 29 stellt dabei bevorzugt eine baulich kombinierte Kupplungsschnittstelle für die erste und die weitere Kühlmittelleitung 19, 19' dar.

Entsprechend einer optionalen Weiterbildung, wie in Fig. 1 mit strichlierten Linien angedeutet wurde, kann die Mehrfach-Kupplungsvorrichtung 27, welche die miteinander korrespondierenden Kupplungselemente 26, 28 umfasst, auch zwischen dem Schweißbrenner 10 und einem dem Schweißbrenner 10 zugeordneten Ende des Schlauchpakets 10 ausgeführt sein. Demnach kann das Schlauchpaket 24 an seinen beiden Enden jeweils eine Verbindungskupplung aufweisen, welche bevorzugt durch je ein Kupplungselement 26 definiert ist, in welcher jeweils ein weiteres Kupplungselement 29 für das Kühlmedium integriert ist. Das mit dem Kupplungselement 29 korrespondierende Steckerelement 35 für die wenigstens eine Kühlmittelleitung 19, 19' des Schweißbrenners 10 ist in einem solchen Fall also dem Schweißbrenner 10 zugeordnet. Entsprechend dieser Ausgestaltung weist das Schlauchpaket 24 also an beiden Enden ein Mehrfach-Kupplungselement 26 mit einem quasi seitlich integrierten, bevorzugt buchsenartig ausgeführten Kupplungselement 29 auf.

Die wenigstens eine Kühlmittelleitung 19, 19', insbesondere die Vor- und Rücklaufleitung für das Kühlmedium, sowie die jeweiligen Leitungen 7; 12; 17; 25 für die Betriebsmedien verlaufen bevorzugt in einem sich zwischen dem Griffteil 37 und dem Schweißbrenner 10 erstreckenden Schutzschlauch 47. Dieser Schutzschlauch 47 ist einerseits mit dem Schweißbrenner 10 verbunden und andererseits mit dem Griffteil 37 des zweiten Kupplungselementes 26 verbunden. Dieser Schutzschlauch 47 fasst die diversen Leitungen 7; 12; 17; 25 für die Betriebsmedien und die wenigstens eine Kühlmittelleitung 19, 19' zu einem Leitungspaket zusammen und stellt zugleich eine Schutzhülle für die darin geführten Leitungsverbindungen dar.

Die Mantelfläche 43 des Griffteils 37 ist bevorzugt zylindrisch oder annähernd zylindrisch ausgeführt. Vorteilhaft ist es dabei, wenn der Griffteil 37 einen maximalen Durchmesser 48 bzw. eine maximale Breite von 50 mm, bevorzugt in etwa 40 mm, aufweist. Ein äußerer Durchmesser 49 des Schutzschlauches 47 ist dabei gleich oder geringfügig kleiner als der Durchmesser 48 des Griffteils 37. Insbesondere ist der Schutzschlauch 47 in das hohlzylindrische Griffteil 37 eingeführt und via innere Wandflächen des Griffteils 37 ablösungssicher gehaltert.

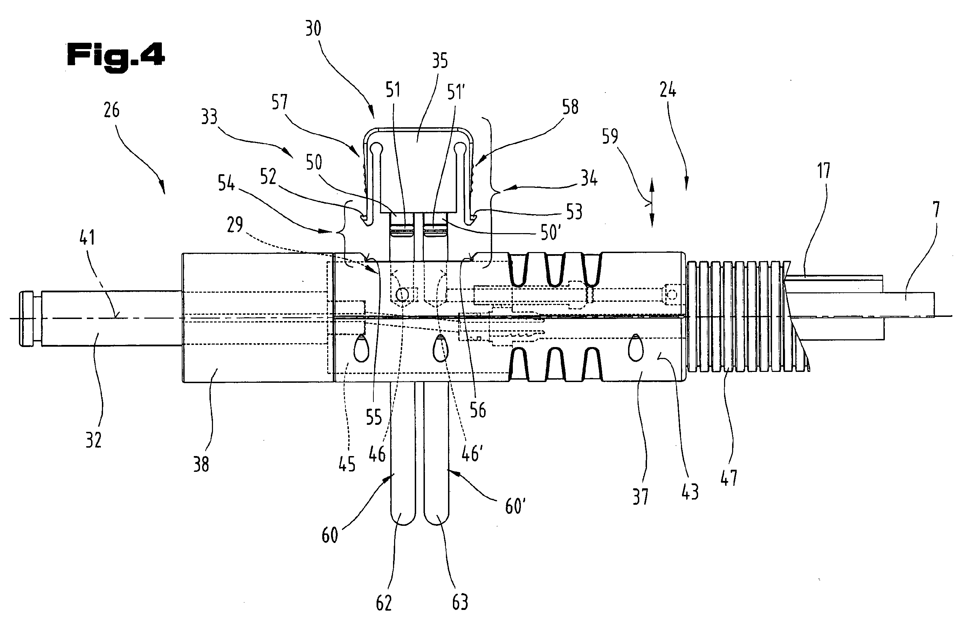

Wie am besten den Fig. 4 bis 7 zu entnehmen ist, weist das als Steckerelement 35 ausgebildete, vierte Kupplungselement 30 wenigstens ein hohlzylindrisches Stiftelement 50, 50' auf. Dieses wenigstens eine hohlzylindrische Stiftelement 50, 50' ist zur gas- oder flüssigkeitsdichten Überleitung eines Kühlmediums ausgehend vom Steckerelement 35 in Richtung zur Kupplungsbuchse 36, und umgekehrt, vorgesehen. Ein Durchmesser des wenigstens einen Stiftelementes 50, 50' ist dabei derart bemessen, dass dieses in den jeweils zugeordneten Kühlmittelkanal 46, 46' der Kupplungsbuchse 36 einführbar ist. In dem vom Steckerelement 35 abgewandten Endabschnitt des wenigstens einen Stiftelementes 50, 50' ist zumindest ein ringförmiges Dichtelement 51, 51', insbesondere ein sogenannter O-Ring angeordnet, um eine ausreichend gas- bzw. flüssigkeitsdichte Verbindung zwischen den bevorzugt paarweise ausgeführten Stiftelementen 50, 50' und den Kühlmittelkanälen 46, 46' aufbauen zu können. Entsprechend einer vorteilhaften Ausführungsform wird die Vorlauf- und auch die Rücklauf-Kühlmittelleitung 19, 19' im Schlauchpaket 24 mittels nur einem Steckerelement 35 gegenüber einem Kühlaggregat bzw. einer Kühlmittelquelle 21 bedarfsweise an- und abgekoppelt. Dadurch wird eine besonders rasche und gleichzeitig überaus fehlersichere Handhabung erzielt.

Wie am besten aus einer Zusammenschau der Fig. 6 und 7 zu entnehmen ist, ist am Steckerelement 35 der Kühlmittelkupplung 33 zumindest ein Vorsprung 52, 53 ausgebildet, welcher zum Aufbau einer bedarfsweise lösbaren, mechanischen Rastverbindung 54 - Fig. 6 - vorgesehen ist. Insbesondere ist der wenigstens eine Vorsprung 52, 53 mit wenigstens einer korrespondierenden Hinterschneidung 55, 56 am dritten Kupplungselement 29 oder am Griffteil 37 des Schlauchpakets 24 wahlweise formschlüssig verbind- und trennbar. Insbesondere wird durch die wenigstens eine Rastverbindung 54 eine Sicherung einer hergestellten Kupplungsverbindung zwischen dem Steckelement 35 und der Kupplungsbuchse 36 gewährleistet, sodass unerwünschte, zum Beispiel druckbedingte, Trennungen der Kühlmittelkupplung 33 ausgeschlossen sind.

Entsprechend einer vorteilhaften Ausführungsform ist der wenigstens eine Vorsprung 52, 53 durch zwei am Steckerelement 35 diametral gegenüberliegende, federnd gelagerte Rastelemente 57, 58 gebildet. Die Vorsprünge 52, 53 an den vom Steckerelement 35 abgewandten Enden der federnd gelagerten Rastelemente 57, 58 hintergreifen im ordnungsgemäß gekuppelten Zustand des dritten und vierten Kupplungselementes 29, 30 die wenigstens eine Hinterschneidung 55, 56 - Fig. 6 - und verhindern derart eine unbeabsichtigte Trennung der Kupplungsverbindung der Kühlmittelkupplung 33. Zum Lösen einer aktiven Kupplungsverbindung zwischen den Kupplungselementen 29, 30 sind lediglich die diametral gegenüberliegenden Rastelemente 57, 58 entgegen ihrer Federwirkung einander anzunähernd und ist sodann das Steckerelement 35 von der Kupplungsbuchse 36 entfern- bzw. abziehbar - Fig. 4.

Eine Kuppelungs- und Entkuppelungsrichtung - Pfeil 59 - zwischen dem dritten und vierten Kupplungselement 29, 30 verläuft dabei quer zur Kuppelungs- und Entkuppelungsrichtung des ersten und zweiten Kupplungselementes 28, 26 bzw. quer zur Längsachse 41 des Schlauchpaketes 24. Das heißt, dass die Kuppelungs- und Entkuppelungsrichtung der Mehrfach-Kupplungsvorrichtung 27 im Vergleich zur Kuppelungs- und Entkuppelungsrichtung - Pfeil 59 - der Kühlmittelkupplung 33 zueinander orthogonal ausgerichtet sind bzw. quer zueinander verlaufen. Insbesondere ist die Kuppelungs- und Entkuppelungsrichtung - Pfeil 59 - der Kühlmittelkupplung 33 radial zur zylindrischen oder annährend zylindrischen Mantelfläche 43 des Griffteils 37 ausgerichtet.

Anstelle der vorhergehend beschriebenen Kühlmittelkupplung 33, welche als Steckverbindung 34 ausgeführt ist, ist es auch möglich, dass das dritte und vierte Kupplungselement 29, 30 als Komponenten einer Schraubverbindungskupplung ausgeführt sind, wobei das vierte bzw. kühlaggregatseitige Kupplungselement eine Überwurfmutter umfasst, welche gegenüber einem Schraubanschluss des dritten bzw. schlauchpaketseitigen Kupplungselementes bedarfsweise verbind- und lösbar ist. Eine vorteilhafte, alternative Ausführungsform einer Kupplungsverbindung für die Überleitung eines insbesondere flüssigen Kühlmediums ausgehend von der Kühlmittelquelle bzw. vom Schweißaggregat in Richtung zum Schlauchpaket bzw. zu dessen Schweißbrenner, und umgekehrt, liegt also darin, die Kühlmittelkupplung als Schraubverbindungskupplung auszuführen. Eine solche Ausführung hält auch relativ hohen Drücken innerhalb des Kühlkreislaufes bzw. hohen, wärmebedingten Ausdehnungen des Kühlmediums problemlos stand. Die Gefahr einer unbeabsichtigten Trennung der Kühlmittel-Kupplungsvorrichtung kann dadurch nahezu ausgeschlossen werden.

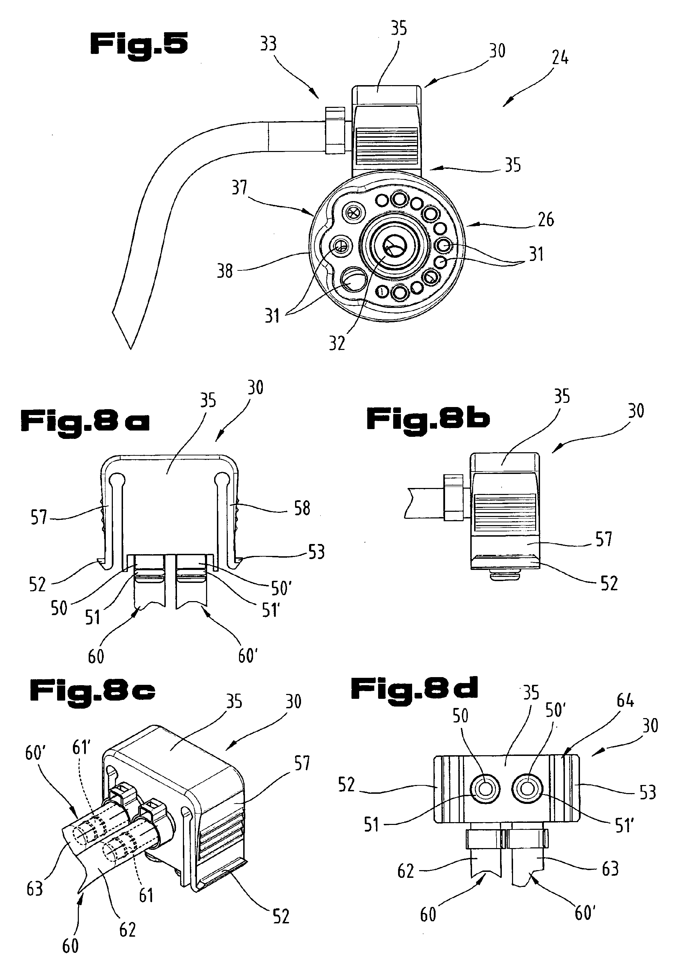

In den Fig. 8a bis 8d ist das von einem Bediener zu betätigende Steckerelement 35 der Kühlmittelkupplung 33 - siehe Fig. 1 bis 7 - in Alleinstellung veranschaulicht. Im Nachfolgenden wird das Steckerelement 35 in Verbindung mit den Darstellungen gemäß Fig. 1 und Fig. 3 beschrieben.

Das Steckerelement 35 ist an wenigstens eine zu einer Kühlmittelquelle 21 führende Kühlmittelleitung 60, 60' angeschlossen. Bevorzugt weist das Steckerelement 35 zwei strömungstechnisch getrennte Anschlussstutzen 61, 61' auf, wobei ein erster Anschlussstutzen 61 mit einer zu einer Kühlmittelquelle 21 führenden Zulaufleitung 62 für ein Kühlmedium und ein weiterer Anschlussstutzen 61' mit einer Rücklaufleitung 63 für das erwärmte Kühlmedium verbindbar bzw. verbunden sind. Die wenigstens eine Kühlmittelleitung 60, 60' auf Seiten der Kühlmittelquelle 21 ist dabei bei Bedarf über das Steckerelement 35 gegenüber der wenigstens einen Kühlmittelleitung 19, 19' in einem Schlauchpaket 24 strömungstechnisch kuppelbar und entkuppelbar. Im strömungstechnisch gekuppelten Zustand zwischen dem Steckerelement 35 und dem Kupplungselement 29 kann das Kühlmedium ausgehend von einer Kühlmittelquelle 21 zumindest in Richtung zu einem Schweißbrenner 10 - Fig. 1 - geführt werden. Bevorzugt wird dabei jedoch über wenigstens eine Kühlmittel-Rücklaufleitung 19', 60' ein Kühlkreislauf 20 aufgebaut, wie dies in Fig. 1 beispielhaft veranschaulicht wurde. Insbesondere wird über Vorlauf-Kühlmittelleitungen 19, 60 und Rücklauf-Kühlmittelleitungen 19', 60' und über die strömungstechnisch integrierte Kühlmittelkupplung 33 umfassend das Steckerelement 35 und das Kupplungselement 29 ein geschlossener, bedarfsweise auftrenn- und schließbarer Kühlkreislauf 20 geschaffen.

Das Steckerelement 35 weist zu dessen Befestigung gegenüber einem korrespondierenden, bevorzugt als Kupplungsbuchse 36 ausgeführten Kupplungselement 29 wenigstens ein Rastelement 57, 58 auf. Das wenigstens einfach, bevorzugt zweifach ausgebildete Rastelement 57, 58 ist dabei bevorzugt werkzeuglos aktivier- und deaktivierbar ausgeführt.

Das erste und das weitere hohlzylindrische Stiftelement 50, 50' am Steckerelement 35 sind jeweils einer Vorlauf- und einer Rücklauf-Kühlmittelleitung 19, 19' innerhalb des Schlauchpaketes 24 zugeordnet. Die Anschlussstutzen 61, 61' verlaufen vorzugsweise winkelig, insbesondere rechtwinkelig, zu den rohrförmigen Stiftelementen 50, 50' des Steckerelementes 35.

Einander gegenüberliegende Wandabschnitte des Steckerelementes 35 weisen jeweils einen Vorsprung 52, 53 zum Aufbau einer formschlüssigen Verbindung mit einem korrespondierenden Kupplungselement 29 auf. Die einander gegenüberliegenden Vorsprünge 52, 53 sind dabei an federnd gelagerten Rastelementen 57, 58 ausgebildet.

Entsprechend einer vorteilhaften Ausführungsform ist das Steckerelement 35 ausgehend von den freien Endabschnitten des wenigstens einen Stiftelementes 50, 50' in Bezug auf die Axialrichtung des wenigstens einen Stiftelementes 50, 50' kontinuierlich oder sprungartig verbreiternd ausgebildet ist, sodass es eine annähernd V-förmige Aussenkontur oder wenigstens eine vorspringende Schulter aufweist.

Gemäß einer zweckmäßigen Ausführungsform ist das Steckerelement 35 in Bezug auf seine Verbindungsschnittstelle 64 - siehe Fig. 8d - gegenüber einem korrespondierenden, als Kupplungsbuchse 36 ausgeführten Kupplungselement 29 - siehe Fig. 3 - symmetrisch ausgebildet ist, sodass es bezüglich zumindest zwei wählbarer, um 180° veränderter Orientierungen gegenüber einer korrespondierenden Kupplungsbuchse 36 kuppelbar ist.

Weiters ist es möglich, im Steckerelement 35 wenigstens ein Ventil anzuordnen, welches derart ausgebildet ist, dass es beim Abkuppeln des Steckerelementes 35 ein Austreten des Kühlmediums verhindert. Bevorzugt ist im Kupplungselement 29 ebenfalls wenigstens ein Ventil zum Verhindern des Austretens des Kühlmittels angeordnet. Die Ventile können derart ausgebildet sein, dass bei einer Abschaltung oder Unterbrechung des Kühlkreislaufes 20 eine Ansteuerung erfolgt, sodass ein möglichst leckagefreies Abkuppeln des Steckerelementes 35 ausführbar ist. Es ist auch möglich, dass die Ventile bei Druckabfall automatisch, insbesondere durch Federwirkung, geschlossen werden, sodass keine aktive Ansteuerung der Ventile notwendig ist. Insbesondere können die Ventile derart ausgebildet sein, dass sie sich bei Abschaltung des Kühlkreislaufs bzw. bei Beendigung des Kühlvorganges, insbesondere bei einem Abfall des Druckes in den Kühlmittelleitungen 19 bzw. 19' und/oder 60 bzw. 60' selbsttätig schließen. Es können aber auch andere Sicherheits- bzw. Abschalteinrichtungen zum Verhindern des Austritts von Flüssigkeit eingesetzt werden.

Es ist aber auch möglich, dass beim Beenden des Schweißprozesses das Kühlmedium aus den Leitungen, insbesondere aus den Kühlmittelleitungen 19, 19' abgepumpt wird, sodass ein sicheres bzw. leckagefreies Entkoppeln der Steckverbindung 34, insbesondere ein Abstecken des Steckerelementes 35 vom Kupplungselement 29 ohne bzw. ohne einem kritischen Flüssigkeitsaustritt ermöglicht ist.

Darüber hinaus ist es möglich, das Kupplungselement 26 auch als Verbindung zwischen dem Schlauchpaket 24 und dem Schweißbrenner 10 zu verwenden, wobei in diesem Fall das Steckerelement 35 über Leitungen dem Schweißbrenner 10 zugeordnet bzw. mit dem Schweißbrenner 10 verbunden ist, sodass beim Verbinden des Schweißbrenners 10 mit dem Kupplungselement 26, der Schweißbrenner 10 über das Steckerelement 35 auch noch mit dem Kupplungselement 29 zu kuppeln ist, um den Kühlkreislauf 20 zu schließen. Insbesondere ist es möglich, dass an jedem Ende des Schlauchpakets 24 ein Kupplungselement 26 angeordnet ist, welche mit den korrespondierenden Kupplungselementen 28 an den schweißtechnischen Komponenten, insbesondere am Schweißgerät 1 oder alternativ an einer externen Drahtvorschubvorrichtung 11 und am Schweißbrenner 10, verbunden werden, wobei anschließend an jedem Ende des Schlauchpaketes 24 an das jeweilige Kupplungselement 29 ein Steckerelement 35 angeschlossen wird, welches mit entsprechenden Kühlleitungen der schweißtechnischen Komponenten verbunden ist.

Wesentlich ist, dass nunmehr das Kupplungselement 26, insbesondere das Schlauchpaket 24, mit einem korrespondierenden Kupplungselement 28 verbunden wird und die Flüssigkeitsversorgung über das Steckelement 35 an das im Kupplungselement 26 integrierte Kupplungselement 29 angeschlossen wird, um eine unidirektionale Kühlstrecke oder bevorzugt einen geschlossenen Kühlkreislauf 20 aufzubauen.

Aus dem Stand der Technik ist es bekannt, die Kühlmittelleitungen aus dem Schlauchpaket 24 herauszuführen und am Ende der herausgelösten bzw. herausgeführten Kühlmittelleitung für jede Kühlmittelleitung jeweils einen Stecker zum Verbinden mit der Kühlmittelquelle 21 anzuordnen. D.h., dass am Schlauchpaket 24 sämtliche Stecker angeordnet waren, die mit den korrespondierenden Kupplungen der einzelnen Komponenten verbunden werden mussten. Erfindungsgemäß wird hingegen das Kupplungselement 26 mit dem Kupplungselement 28 standardmäßig verbunden, wobei das Kühlmedium über das gesonderte Steckerelement 35 und das korrespondierende Kupplungselement 29 in Kühlmittelleitungen 19, 19' des Schlauchpaket 24 geleitet wird, um den Schweißbrenner 10 zu kühlen. Daraus resultiert, dass das Schlauchpaket 24 und das Kupplungselement 26 im Wesentlichen einen langgestreckten, formflexiblen Zylinder bilden, welcher unter anderem durch die Bewegungsarme von Hohlwellen-Roboter geführt werden kann, ohne dass Kühlleitungen demontiert bzw. gesondert eingezogen werden müssen.

Die vorstehend angegebene Kupplungsvorrichtung 27 bzw. Kühlmittelkupplung 33 kann selbstverständlich auch zur Anbindung eines Schneidbrenners oder eines Plasmabrenners an ein entsprechendes Schlauchpaket 24 bzw. an ein Aggregat für die Bereitstellung der jeweils erforderlichen Betriebsmedien eingesetzt werden.

Die Ausführungsbeispiele zeigen mögliche Ausführungsvarianten des Schlauchpakets 24 bzw. dessen Kupplungsvorrichtung 27, wobei an dieser Stelle bemerkt sei, dass auch diverse Kombinationen der einzelnen Ausführungsvarianten untereinander möglich sind, gemäß den beiliegenden Patentansprüchen.

Der Ordnung halber sei abschließend darauf hingewiesen, dass zum besseren Verständnis des Aufbaus des Schlauchpaketes 24 bzw. der Kupplungsvorrichtung 27 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Schweißgerät | 42 | Abstand |
| 2 | Schweißaggregat | 43 | Mantelfläche |
| 3 | Leistungsteil | 44 | Übergangsschnittstelle |
| 4 | Steuervorrichtung | 45 | Anschlussblock |
| 5 | Gehäuse | | |
| | | 46,46' | Kühlmittelkanal |
| 6 | Ventil | 47 | Schutzschlauch |
| 7 | Leitung | 48 | Durchmesser |
| 8 | Schweißgas | 49 | Durchmesser |
| 9 | Gasspeicher | 50,50' | Stiftelement |
| 10 | Schweißbrenner | | |
| | | 51,51' | Dichtelement |
| 11 | Drahtvorschubvorrichtung | 52 | Vorsprung |
| 12 | Leitung | 53 | Vorsprung |
| 13 | Schweißdraht | 54 | Rastverbindung |
| 14 | Vorratstrommel | 55 | Hinterschneidung |
| 15 | Lichtbogen | | |
| | | 56 | Hinterschneidung |
| 16 | Werkstück | 57 | Rastelement |
| 17 | Schweißstrom-Leitung | 58 | Rastelement |
| 18 | Schweißstrom-Leitung | 59 | Kuppelungs- und Entkuppelungsrichtung |
| 19,19' | Kühlmittelleitung | | |
| 20 | Kühlkreislauf | 60,60' | Kühlmittelleitung |
| | | | |
| 21 | Kühlmittelquelle | 61,61' | Anschlussstutzen |
| 22 | Flüssigkeitsbehälter | 62 | Zulaufleitung |
| 23,23' | Ein- und/oder Ausgabevorrichtung | 63 | Rücklaufleitung |
| 24 | Schlauchpaket | 64 | Verbindungsschnittstelle |
| 25 | Steuerleitung | | |
| | | | |
| 26 | Kupplungselement (2.) | | |
| 27 | Kupplungsvorrichtung | | |
| 28 | Kupplungselement (1.) | | |
| 29 | Kupplungselement (3.) | | |
| 30 | Kupplungselement (4.) | | |
| | | | |
| 31,31 | Verbindungsschnittstelle | | |
| 32,32' | Verbindungsschnittstelle | | |
| 33 | Kühlmittelkupplung | | |
| 34 | Steckverbindungskupplung | | |
| 35 | Steckerelement | | |
| | | | |
| 36 | Kupplungsbuchse | | |
| 37 | Griffteil | | |
| 38 | Führungsorgan | | |
| 39 | Führungsorgan | | |
| 40 | Führungsbohrung | | |
| 41 | Längsachse | | |

## Patentansprüche

1. Kupplungselement (26), welches mit einem Schlauchpaket (24), umfassend eine Mehrzahl von Leitungen (7; 12; 17; 25) zur Versorgung eines Schweißbrenners (10) mit Betriebsmedien, wie zum Beispiel Schweißstrom, Schweißdraht, Schutzgas und/oder Steuersignalen, sowie mit wenigstens einer Kühlmittelleitung (19, 19') zur Zufuhr eines Kühlmediums einer Kühlmittelquelle (21) zu einem Schweißbrenner (10) verbindbar ist, **dadurch gekennzeichnet, dass** im Kupplungselement (26) ein weiteres Kupplungselement (29) für die wenigstens eine Kühlmittelleitung (19, 19') integriert ist, dessen Kuppelungs- und Entkuppelungsrichtung (59) quer zu einer Längsachse (41) des Kupplungselements (26) oder eines daran anzuschließenden Schlauchpakets (24) ausgerichtet ist, wobei die jeweiligen Kupplungselemente (26, 29) unabhängig voneinander kuppel- und entkuppelbar sind.

2. Kupplungselement nach Anspruch 1, **dadurch gekennzeichnet, dass** das weitere Kupplungselement (29) als Teilkomponente einer Steckverbindung (34) für die wenigstens eine Kühlmittelleitung (19, 19'; 60, 60') ausgebildet ist.

3. Kupplungselement nach einem der vorhergehenden Ansprüche, **dadurch gekennzeichnet, dass** das weitere Kupplungselement (29) in einem im Wesentlichen formstabilen Griffteil (37) des Kupplungselements (26) angeordnet ist.

4. Kupplungselement nach einem der vorhergehenden Ansprüche, **dadurch gekennzeichnet, dass** eine sichtbare Fläche oder eine Übergangsschnittstelle (44) des weiteren Kupplungselements (29) bündig oder annähernd bündig mit der äußeren Mantelfläche (43) eines Griffteils (37) des Kupplungselementes (26) abschließt oder gegenüber der äußeren Mantelfläche (43) des Griffteils (37) vertieft angeordnet ist.

5. Kupplungselement nach Anspruch 3 oder 4, **dadurch gekennzeichnet, dass** der Griffteil (37) zylindrisch oder annähernd zylindrisch ausgeführt ist, und dass dessen maximaler Durchmesser (48) an eine Durchführung in einem Hohlwellen-Roboter angepasst ist.

6. Kupplungselement nach einem der vorhergehenden Ansprüche, **dadurch gekennzeichnet, dass** das weitere Kupplungselement (29) oder ein Griffteil (37) des Kupplungselementes (26) wenigstens eine Vertiefung oder wenigstens eine Hinterschneidung (55, 56) aufweist, welche formschlüssig, mechanisch mit einem korrespondierenden Steckerelement (35) verbunden ist.

7. Kupplungselement nach Anspruch 6, **dadurch gekennzeichnet, dass** das Steckerelement (35) wenigstens ein hohlzylindrisches Stiftelement (50, 50') umfasst, das zur gas- oder flüssigkeitsdichten Überleitung eines Kühlmediums gegenüber einem korrespondierenden Kupplungselement (29) ausgebildet ist, und dass zur Befestigung gegenüber dem Kupplungselement (29) wenigstens ein Rastelement (57, 58) ausgebildet ist.

8. Kupplungselement nach Anspruch 7, **dadurch gekennzeichnet, dass** das Steckerelement (35) ein erstes und ein weiteres hohlzylindrisches Stiftelement (50, 50') umfasst, welche jeweils einer Vorlauf- und einer Rücklauf-Kühlmittelleitung (19, 19') für ein Kühlmedium zugeordnet sind.

9. Kupplungselement nach Anspruch 7 oder 8, **dadurch gekennzeichnet, dass** das Steckerelement (35) zumindest einen Anschlussstutzen (61, 61') für eine Kühlmittelleitung (60, 60'), insbesondere für eine Zulaufleitung (62) und eine Rücklaufleitung (63) für Kühlmittel in Bezug auf eine Kühlmittelquelle (21) oder einen Schweißbrenner (10) aufweist.

10. Kupplungselement nach Anspruch 9, **dadurch gekennzeichnet, dass** die Anschlussstutzen (61, 61') winkelig, insbesondere rechtwinkelig, zu den rohrförmigen Stiftelementen (50, 50') verlaufen.

11. Kupplungselement nach einem der Ansprüche 7 bis 10, **dadurch gekennzeichnet, dass** das Steckerelement (35) blockartig ausgebildet ist und einander gegenüberliegende Wandabschnitte des Steckerelementes (35) jeweils einen Vorsprung (52, 53) zum Aufbau einer formschlüssigen Verbindung mit einem korrespondierenden Kupplungselement (29) umfassen.

12. Kupplungselement nach Anspruch 11, **dadurch gekennzeichnet, dass** die einander gegenüberliegenden Vorsprünge (52, 53) als federnd gelagerte Rastelemente (57, 58) ausgebildet sind.

13. Kupplungselement nach einem der Ansprüche 7 bis 12, **dadurch gekennzeichnet, dass** das Steckerelement (35) ausgehend von den freien Endabschnitten des wenigstens einen Stiftelementes (50, 50') in Bezug auf die Axialrichtung des wenigstens einen Stiftelementes (50, 50') kontinuierlich oder sprungartig verbreiternd ausgebildet ist, sodass es eine annähernd V-förmige Außenkontur oder wenigstens eine vorspringende Schulter aufweist.

14. Kupplungselement nach einem der Ansprüche 7 bis 13, **dadurch gekennzeichnet, dass** das Steckerelement (35) in Bezug auf seine Verbindungsschnittstelle (64) gegenüber einem korrespondierenden, als Kupplungsbuchse (36) ausgeführten Kupplungselement (29) symmetrisch ausgebildet ist, sodass es bezüglich zumindest zwei wählbarer, um 180° veränderter Orientierungen gegenüber einer korrespondierenden Kupplungsbuchse (36) kuppelbar ist.

15. Kupplungselement nach einem der Ansprüche 6 bis 14, **dadurch gekennzeichnet, dass** eine sichtbare Fläche oder eine Übergangsschnittstelle (44) des korrespondierenden Kupplungselementes (29) bündig oder annähernd bündig mit der Mantelfläche (43) eines Griffteils (37) für das Kupplungselement (26) des Schlauchpakets (24) abschließt oder gegenüber der äußeren Mantelfläche (43) dieses Griffteils (37) vertieft angeordnet ist.

16. Kupplungselement nach einem der Ansprüche 6 bis 15, **dadurch gekennzeichnet, dass** das Kupplungselement (26) des Schlauchpakets (24) und das mit dem Steckerelement (35) korrespondierende Kupplungselement (29) gemeinsam mit einem Schlauchpaket (24) eine einstückige, baulich kombinierte Einheit bilden.

17. Kupplungselement nach einem der Ansprüche 6 bis 16, **dadurch gekennzeichnet, dass** eine Kuppelungs- und Entkuppelungsrichtung (59) zwischen dem Steckerelement (35) und dem korrespondierenden Kupplungselement (29) quer zu einer Kuppelungs- und Entkuppelungsrichtung des Kupplungselementes (26) des Schlauchpakets (24) ausgerichtet ist.

18. Schlauchpaket (24) umfassend eine Mehrzahl von Leitungen (7; 12; 17; 25) zur Versorgung eines Schweißbrenners (10) mit Betriebsmedien, wie zum Beispiel Schweißstrom, Schweißdraht, Schutzgas und/oder Steuersignalen, sowie mit wenigstens einer Kühlmittelleitung (19, 19') zur Zufuhr eines Kühlmediums einer Kühlmittelquelle (21) zu einem Schweißbrenner (10), **gekennzeichnet durch** wenigstens ein Kupplungselement (26) nach einem der Ansprüche 1 bis 17 zur bedarfsweise lösbaren Anbindung an ein Schweißaggregat (2) oder an einen Schweißbrenner (10).

19. Schweißvorrichtung mit einem Schweißaggregat (2) und einem daran angeschlossenen Schweißbrenner (10), **dadurch gekennzeichnet, dass** der Schweißbrenner (10) mittels einem Schlauchpaket (24) nach Anspruch 18 bedarfsweise lösbar mit dem Schweißaggregat (2) verbunden ist.

## Claims

1. Coupling element (26), which can be connected to a hose assembly (24) comprising a plurality of lines (7; 12; 17; 25) for supplying a welding torch (10) with operating media, such as welding current, welding wire, protective gas and/or control signals, and having at least one coolant line (19, 19') for feeding a cooling medium of a coolant source (21) to a welding torch (10), **characterized in that** a further coupling element (29) for the at least one coolant line (19, 19') is integrated in the coupling element (26), the coupling and decoupling direction (59) of which is orientated to be transverse to a longitudinal axis (41) of the coupling element (26) or a thereto following hose assembly (24), wherein the coupling elements (26, 29) can each be coupled and decoupled independently from each other.

2. Coupling element according to claim 1, **characterized in that** the other coupling element (29) is embodied as a component of a plug connection (34) for the at least one coolant line (19, 19'; 60, 60').

3. Coupling element according to one of the preceding claims, **characterized in that** the other coupling element (29) is arranged in an essentially dimensionally stable handle part (37) of the coupling element (26).

4. Coupling element according to one of the preceding claims, **characterized in that** a visible area or a transition interface (44) of the other coupling element (29) is flush or approximately flush with the outer lateral surface (43) of a handle part (37) of the coupling element (26) or is arranged to be lowered with respect to the outer lateral surface (43) of the handle part (37).

5. Coupling element according to claim 3 or 4, **characterized in that** the handle part (37) is designed to be cylindrical or approximately cylindrical and that its maximum diameter (48) is adjusted to a feedthrough in a hollow-shaft robot.

6. Coupling element according to one of the preceding claims, **characterized in that** the other coupling element (29) or a handle part (37) of the coupling element (26) has at least one depression or at least one undercut (55, 56), which is formed for a positive-locking, mechanical connection with a corresponding plug element (35).

7. Coupling element according to claim 6, **characterized in that** the plug element (35) comprises at least one hollow-cylindrical pin element (50, 50'), which is embodied for the gas and fluid proof transmission of a cooling medium with respect to a corresponding coupling element (29) and that at least one clip-lock element (57, 58) is embodied for the securing with respect to the coupling element (29).

8. Coupling element according to claim 7, **characterized in that** the plug element (35) comprises a first and another hollow-cylindrical pin element (50, 50'), each of which is allocated to one respective feed and one respective return coolant line (19, 19') for a cooling medium.

9. Coupling element according to claim 7 or 8, **characterized in that** the plug element (35) has at least one connection piece (61, 61') for a coolant line (60, 60'), in particular for a feed line (62) and a return line (63) for coolant with respect to a coolant source (21) or a welding torch (10).

10. Coupling element according to claim 9, **characterized in that** the connection pieces (61, 61') extend in an angled, in particular right-angled manner, to the tube-shaped pin elements (50, 50').

11. Coupling element according to one of claims 7 to 10, **characterized in that** it is embodied block-like and wall sections opposite each other of the plug element (35) comprise one protrusion (52, 53) each for establishing a positive-locking connection with a corresponding coupling element (29).

12. Coupling element according to claim 11, **characterized in that** the protrusions (52, 53) opposite each other are embodied as spring-mounted clip-lock elements (57, 58).

13. Coupling element according to one of claims 7 to 12, **characterized in that** the plug element (35) is embodied in a continuingly or abruptly expanding way starting from the free end sections of the at least one pin element (50, 50') with respect to the axial direction of the at least one pin element (50, 50'), so that it has an approximately V-shaped outer contour or at least a protruding collar.

14. Coupling element according to one of claims 7 to 13, **characterized in that** the plug element (35) is embodied symmetrically with respect to its connection interface (64) to a corresponding coupling element (29) being embodied as a coupling bushing (36), so that it can be coupled with a corresponding coupling bushing (36) in at least two orientations differing in 180° that can be selected freely.

15. Coupling element according to one of claims 6 to 14, **characterized in that** a visible area or a transition interface (44) of the corresponding coupling element (29) is flush or approximately flush with the lateral surface (43) of a handle part (37) for the coupling element (26) of the hose assembly (24) or is arranged to be lowered with respect to the outer lateral surface (43) of this handle part (37).

16. Coupling element according to one of claims 6 to 15, **characterized in that** that the coupling element (26) of the hose assembly (24) and the coupling element (29) corresponding with the plug element (35) form together with a hose assembly (24) an integral, structurally combined unit.

17. Coupling element according to one of claims 6 to 16, **characterized in that** a coupling and decoupling direction (59) between the plug element (35) and the corresponding coupling element (29) is aligned to be transverse to the coupling and decoupling direction of the coupling element (26) of the hose assembly (24).

18. Hose assembly (24) comprising a plurality of lines (7; 12; 17; 25) for supplying a welding torch (10) with operating media, such as welding current, welding wire, protective gas and/or control signals, and having at least one coolant line (19, 19') for feeding a cooling medium of a coolant source (21) to a welding torch (10), **characterized by** at least one coupling element (26) according to one of claims 1 to 17 for an optionally detachable connection to a welding unit (2) or a welding torch (10).

19. Welding device with a welding unit (2) and a welding torch (10) connected thereto, **characterized in that** the welding torch (10) is optionally detachably connected to the welding unit (2) by means of a hose assembly (24) according to claim 18.

## Revendications

1. Élément de raccordement (26), qui peut être assemblé à un faisceau de tuyaux flexibles (24), comportant une pluralité de conduites (7 ; 12 ; 17 ; 25) destinées à alimenter un chalumeau de soudage (10) avec des moyens de service, tels qu'un courant de soudage, un fil de soudage, un gaz de protection et/ou des signaux de commande, et comportant au moins une conduite de fluide de refroidissement (19, 19') destinée à acheminer un fluide de refroidissement d'une source de fluide de refroidissement (21) vers un chalumeau de soudage (10), **caractérisé en ce que** dans l'élément de raccordement (26) est intégré un élément de raccordement (29) supplémentaire pour ladite au moins une conduite de fluide de refroidissement (19, 19'), dont le sens de couplage ou de découplage (59) est orienté transversalement à un axe longitudinal (41) de l'élément de raccordement (26) ou d'un faisceau de tuyaux flexibles (24) à raccorder à celui-ci, chacun des éléments de raccordement (26, 29) pouvant être couplé ou découplé indépendamment de l'autre.

2. Élément de raccordement selon la revendication 1, **caractérisé en ce que** l'élément de raccordement (29) supplémentaire est réalisé sous la forme d'un composant partiel d'une fiche de raccordement (34) pour ladite au moins une conduite de fluide de refroidissement (19, 19' ; 60, 60').

3. Élément de raccordement selon l'une quelconque des revendications précédentes, **caractérisé en ce que** l'élément de raccordement (29) supplémentaire est agencé dans un élément de maniement (37) à forme sensiblement stable de l'élément de raccordement (26).

4. Élément de raccordement selon l'une quelconque des revendications précédentes, **caractérisé en ce qu'**une surface visible ou une interface de transition (44) de l'élément de raccordement (29) supplémentaire est disposée à fleur ou approximativement à fleur de la paroi latérale extérieure (43) d'un élément de maniement (37) de l'élément de raccordement (26) ou est disposé plus bas que la paroi latérale extérieure (43) de l'élément de maniement (37).

5. Élément de raccordement selon la revendication 3 ou 4, **caractérisé en ce que** l'élément de maniement (37) est cylindrique ou approximativement cylindrique et **en ce que** le diamètre maximal (48) de celui-ci est ajusté à un passage dans un robot à arbre creux.

6. Élément de raccordement selon l'une quelconque des revendications précédentes, **caractérisé en ce que** l'élément de raccordement (29) supplémentaire ou un élément de maniement (37) de l'élément de raccordement (26) comporte au moins un creux ou au moins un détalonnage (55, 56) qui est assemblé mécaniquement, par conjugaison de forme, à un élément à fiches mâles (35) correspondant.

7. Élément de raccordement selon la revendication 6, **caractérisé en ce que** l'élément à fiches mâles (35) comporte au moins une broche (50, 50') cylindrique creuse, qui est réalisée pour le transfert étanche aux gaz ou aux liquides d'un fluide de refroidissement par rapport à un élément de raccordement (29) correspondant, et **en ce qu'**au moins un élément d'encliquetage (57, 58) est réalisé pour la fixation par rapport à l'élément de raccordement (29).

8. Élément de raccordement selon la revendication 7, **caractérisé en ce que** l'élément à fiches mâles (35) comporte une première et une autre broche (50, 50') cylindrique creuse, qui sont associées chacune à une conduite d'admission et à une conduite de retour (19, 19') pour un fluide de refroidissement.

9. Élément de raccordement selon la revendication 7 ou 8, **caractérisé en ce que** l'élément à fiches mâles (35) comporte au moins une tubulure de raccordement (61, 61') pour une conduite de fluide de refroidissement (60, 60'), en particulier pour une conduite d'admission (62) et une conduite de retour (63) du fluide de refroidissement par référence à une source de fluide de refroidissement (21) ou à un chalumeau de soudage (10).

10. Élément de raccordement selon la revendication 9, **caractérisé en ce que** les tubulures de raccordement (61, 61') s'étendent en angle, en particulier en angle droit, par rapport aux broches (50, 50') tubulaires.

11. Élément de raccordement selon l'une quelconque des revendications 7 à 10, **caractérisé en ce que** l'élément à fiches mâles (35) est réalisé en forme de bloc et des parties de paroi face à face de l'élément à fiches mâles (35) comportent chacune une saillie (52, 53) pour la réalisation d'un assemblage par conjugaison de forme avec un élément de raccordement (29) correspondant.

12. Élément de raccordement selon la revendication 11, **caractérisé en ce que** les saillies (52, 53) face à face sont réalisées sous la forme d'éléments d'encliquetage (57, 58) montés à ressort.

13. Élément de raccordement selon l'une quelconque des revendications 7 à 12, **caractérisé en ce que** l'élément à fiches mâles (35) est réalisé en s'élargissant en continu ou par paliers à partir des zones d'extrémité libres de ladite au moins une broche (50, 50') par référence à la direction axiale de ladite au moins une broche (50, 50'), de telle sorte qu'elle comporte un contour extérieur sensiblement en forme de V ou au moins un épaulement saillant.

14. Élément de raccordement selon l'une quelconque des revendications 7 à 13, **caractérisé en ce que** l'élément à fiches mâles (35), par référence à son interface d'assemblage (64), est réalisé symétriquement par rapport à un élément de raccordement (29) correspondant réalisé sous forme de fiche femelle d'assemblage (36), de telle sorte qu'il peut être couplé par rapport à au moins deux orientations sélectionnables, modifiées de 180°, par rapport à une fiche femelle d'assemblage (36) correspondante.

15. Élément de raccordement selon l'une quelconque des revendications 6 à 14, **caractérisé en ce qu'**une surface visible ou une interface de transition (44) de l'élément de raccordement (29) correspondant est disposée à fleur ou approximativement à fleur de la paroi latérale (43) d'un élément de maniement (37) de l'élément de raccordement (26) du faisceau de tuyaux flexibles (24) ou est disposé plus bas que la paroi latérale extérieure (43) de cet élément de maniement (37).

16. Élément de raccordement selon l'une quelconque des revendications 6 à 15, **caractérisé en ce que** l'élément de raccordement (26) du faisceau de tuyaux flexibles (24) et l'élément de raccordement (29) correspondant à l'élément à fiches mâles (35) forment conjointement avec un faisceau de tuyaux flexibles (24) une unité monobloc, combinée constructivement.

17. Élément de raccordement selon l'une quelconque des revendications 6 à 16, **caractérisé en ce qu'**un sens de couplage ou de découplage (59) entre l'élément à fiches mâles (35) et l'élément de raccordement (29) correspondant est orienté transversalement à un sens de couplage ou de découplage de l'élément de raccordement (26) du faisceau de tuyaux flexibles (24).

18. Faisceau de tuyaux flexibles (24) comportant une pluralité de conduites (7 ; 12 ; 17 ; 25) destinées à alimenter un chalumeau de soudage (10) avec des moyens de service, tels qu'un courant de soudage, un fil de soudage, un gaz de protection et/ou des signaux de commande, et comportant au moins une conduite de fluide de refroidissement (19, 19') destinée à acheminer un fluide de refroidissement d'une source de fluide de refroidissement (21) vers un chalumeau de soudage (10), **caractérisé par** au moins un élément de raccordement (26) selon l'une quelconque des revendications 1 à 17 pour le raccordement, amovible si nécessaire, à un groupe de soudage (2) ou à un chalumeau de soudage (10).

19. Dispositif de soudage comportant un groupe de soudage (2) et un chalumeau de soudage (10) raccordé à celui-ci, **caractérisé en ce que** le chalumeau de soudage (10) est relié au groupe de soudage (2), de manière amovible si nécessaire, au moyen d'un faisceau de tuyaux flexibles (24) selon la revendication 18.
